# EUROPEAN PATENT SPECIFICATION

(11) **EP 4 506 392 B1**
(45) Date of publication and mention of the grant of the patent: **26.08.2026**
(21) Application number: 23784788.4
(22) Date of filing: 06.04.2023
(51) Int. Cl.: C08G 64/04, C08G 63/193, C08G 63/64, C08G 64/06, G02B 1/04

(54) **THERMOPLASTIC RESIN AND OPTICAL LENS INCLUDING SAME**
THERMOPLASTISCHES HARZ UND OPTISCHE LINSE DAMIT
RÉSINE THERMOPLASTIQUE ET LENTILLE OPTIQUE LA COMPRENANT

(30) Priority: 07.04.2022 JP 2022063948; 03.02.2023 JP 2023015431
(43) Date of publication of application: 12.02.2025
(60) Divisional application: 25193368.5 / 4 617 737; 26173263.0 / 4 760 359
(73) Proprietor: MITSUBISHI GAS CHEMICAL COMPANY, INC., Chiyoda-ku Tokyo 100-8324 (JP)
(72) Inventor: KATO, Noriyuki, Tokyo 100-8324 (JP); NISHIMORI, Katsushi, Tokyo 125-8601 (JP); MOTEGI, Atsushi, Tokyo 125-8601 (JP); ISHIHARA, Kentaro, Tokyo 100-8324 (JP); MURATA SUZUKI, Shoko, Tokyo 125-8601 (JP); SATO, Atsuhiro, Tokyo 125-8601 (JP); ISHIKAWA, Shun, Kamisu-shi, Ibaraki 314-0102 (JP)
(74) Representative: Hoffmann Eitle
(86) International application number: PCT/JP2023/014161
(87) International publication number: WO 2023/195504

(56) References cited:
- JP-A- 2000 248 058
- JP-A- H06 222 581
- JP-A- H07 268 061
- JP-B2- 3 186 299
- US-A- 3 544 512
- US-A1- 2015 285 954
- US-B2- 8 795 824

## Description

### TECHNICAL FIELD

The present invention relates to an optical lens including a thermoplastic resin. More specifically, the present invention relates to an optical lens including a polycarbonate resin, a polyester carbonate resin or a polyester resin.

### BACKGROUND ART

As a material of optical lenses to be used in optical systems of various cameras such as cameras, film integrated type cameras and video cameras, an optical glass or an optical resin is used. Optical glasses are excellent in heat resistance, transparency, size stability, chemical resistance, etc., but have problems of high material costs, bad molding processability and low productivity.

Meanwhile, advantageously, optical lenses made of optical resins can be mass-produced by injection molding. As high refractive index materials for camera lenses, polycarbonate, polyester carbonate, polyester resins, etc. are used.

When using an optical resin as an optical lens, in addition to optical characteristics such as the refractive index and Abbe number, heat resistance, transparency, low water absorbability, chemical resistance, low birefringence, moist heat resistance, etc. are required. In particular, recently, optical lenses having a high refractive index and high heat resistance have been desired, and various resins have been developed (Patent Documents 1 to 5).

Patent document 6 (JP 3186299 B2) relates to polycarbonate thermoplastic resins used in a photosensitive layer of an electrophotographic photoreceptor. Patent document 7 (US 2015/285954 A1) relates to specific polycarbonate resins which may be used in optical lenses. Patent document 8 (US 8 795 824 B2) relates to a light diffusing resin composition comprising a polycarbonate carbonate copolymer (A) and a light diffusing agent (B). The light diffusing resin composition is suitable as a material for, for example, an optical molded body or a light diffusing plate.

### PRIOR ART DOCUMENTS

### PATENT DOCUMENTS

Patent Document 1: Japanese Laid-Open Patent Publication No. 2018-2893
Patent Document 2: Japanese Laid-Open Patent Publication No. 2018-2894
Patent Document 3: Japanese Laid-Open Patent Publication No. 2018-2895
Patent Document 4: Japanese Laid-Open Patent Publication No. 2018-59074
Patent Document 5: WO2017/078073
Patent document 6: JP 3186299 B2
Patent document 7: US 2015/285954 A1
Patent document 8: US 8 795 824 B2

### SUMMARY OF THE INVENTION

### PROBLEMS TO BE SOLVED BY THE INVENTION

The present invention addresses the problem of providing an optical lens obtained by using a thermoplastic resin, said thermoplastic resin being excellent in optical characteristics such as the refractive index, Abbe number and photoelastic coefficient while maintaining heat resistance suitable for use.

### MEANS FOR SOLVING THE PROBLEMS

The present inventors diligently made researches in order to solve the conventional problems and found that a thermoplastic resin excellent in optical characteristics such as the refractive index, Abbe number and photoelastic coefficient and also excellent in heat resistance is obtained by using, as a raw material, a monomer having a specific structure obtained by introducing a specific aryl group or aralkyl group into a 1,3-bis(1-methyl-1-phenylethyl)benzene compound, and thus the present invention was achieved.

### ADVANTAGEOUS EFFECT OF THE INVENTION

According to the present invention, it is possible to provide an optical lens including a thermoplastic resin excellent in optical characteristics such as the refractive index, Abbe number and photoelastic coefficient while maintaining heat resistance suitable for use.

### BRIEF DESCRIPTION OF THE DRAWINGS

FIG. 1 shows a chart of the data of differential scanning calorimetry (DSC) with respect to the crystal of the compound obtained in Synthesis Example 2.
FIG. 2 shows a chart of powder X-ray diffraction (PXRD) measurement of the crystal of the compound obtained in Synthesis Example 2.

### EMBODIMENTS FOR CARRYING OUT THE INVENTION

Hereinafter, the present invention will be described in detail by way of synthesis examples, working examples, etc.,.

### <Thermoplastic Resin>

The thermoplastic resin to be used in an optical lens contains a structural unit (A) derived from a monomer represented by general formula (1):

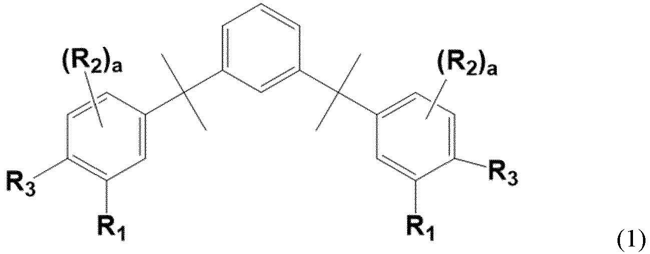

In the formula: each R₁ independently represents an aryl group having 6 to 14 carbon atoms or an aralkyl group having 7 to 17 carbon atoms; each R₂ independently represents a hydrogen atom, an aryl group having 6 to 14 carbon atoms, or an aralkyl group having 7 to 17 carbon atoms; each a independently represents an integer of 0 or 1 to 3; each R₃ independently represents -OH or -O-(CH₂)ₙ-OH; and n represents an integer of 1 to 4.

### (R₁ in General Formula (1))

Each R₁ in general formula (1) independently represents an aryl group having 6 to 14 carbon atoms or an aralkyl group having 7 to 17 carbon atoms, but preferably independently represents an aryl group having 6 to 14 carbon atoms or an aralkyl group having 7 to 13 carbon atoms, more preferably independently represents an aryl group having 6 to 14 carbon atoms or an aralkyl group having 7 to 11 carbon atoms, even more preferably independently represents an aryl group having 6 to 14 carbon atoms, and particularly preferably independently represents an aryl group having 6 to 10 carbon atoms.

Examples of the aryl group having 6 to 14 carbon atoms include a phenyl group, a naphthyl group, an anthryl group, and a phenanthryl group. Among them, preferred are a phenyl group and a naphthyl group, and more preferred is a phenyl group.

Examples of the aralkyl group having 7 to 17 carbon atoms include a benzyl group, a phenethyl group, a 1-methyl-1-phenylethyl group, a naphthalen-1-yl-methyl group, a naphthalen-2-yl-methyl group, a 1-methyl-1-(1-naphthyl)ethyl group, a 1-methyl-1-(2-naphthyl)ethyl group, an anthracen-9-yl-methyl group, and a phenanthren-9-yl-methyl group. Among them, preferred are a benzyl group, a 1-methyl-1-phenylethyl group, a naphthalen-1-yl-methyl group and a naphthalen-2-yl-methyl group, more preferred are a benzyl group, a naphthalen-1-yl-methyl group and a naphthalen-2-yl-methyl group, and even more preferred is a benzyl group.

Regarding R₁s in general formula (1), particularly preferably, each of the two R₁s is a phenyl group.

### (R₂ in General Formula (1))

Each R₂ in general formula (1) independently represents a hydrogen atom, an aryl group having 6 to 14 carbon atoms, or an aralkyl group having 7 to 17 carbon atoms, but preferably independently represents a hydrogen atom, an aryl group having 6 to 10 carbon atoms, or an aralkyl group having 7 to 13 carbon atoms, and more preferably independently represents a hydrogen atom, an aryl group having 6 to 10 carbon atoms, or an aralkyl group having 7 to 11 carbon atoms.

Examples of the aryl group having 6 to 14 carbon atoms include a phenyl group, a naphthyl group, an anthryl group, and a phenanthryl group. Among them, preferred are a phenyl group and a naphthyl group, and more preferred is a phenyl group.

Examples of the aralkyl group having 7 to 17 carbon atoms include a benzyl group, a phenethyl group, a 1-methyl-1-phenylethyl group, a naphthalen-1-yl-methyl group, a naphthalen-2-yl-methyl group, a 1-methyl-1-(1-naphthyl)ethyl group, a 1-methyl-1-(2-naphthyl)ethyl group, an anthracen-9-yl-methyl group, and a phenanthren-9-yl-methyl group. Among them, preferred are a benzyl group, a 1-methyl-1-phenylethyl group, a naphthalen-1-yl-methyl group and a naphthalen-2-yl-methyl group, more preferred are a benzyl group, a naphthalen-1-yl-methyl group and a naphthalen-2-yl-methyl group, and even more preferred is a benzyl group.

Each a in general formula (1) independently represents an integer of 0 or 1 to 3, but preferably independently represents 0, 1 or 2, more preferably independently represents 0 or 1, and even more preferably independently represents 0. In the case where each a in general formula (1) represents an integer of 1 to 3, it is preferable that at least one R₂ is bonded to the ortho position of R₃.

### (R₃ in General Formula (1))

Each R₃ in general formula (1) independently represents -OH or -O-(CH₂)ₙ-OH.

The compound in the case where R₃ in general formula (1) is -OH is a compound represented by general formula (1A) (Compound 1A).

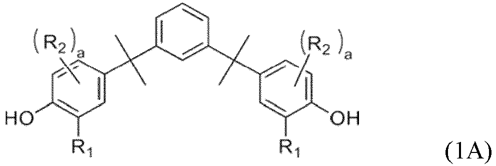

In the formula, R₁, R₂ and a are the same as those in general formula (1).

The compound in the case where R₃ in general formula (1) is -O-(CH₂)ₙ-OH is a compound represented by general formula (1B) (Compound 1B).

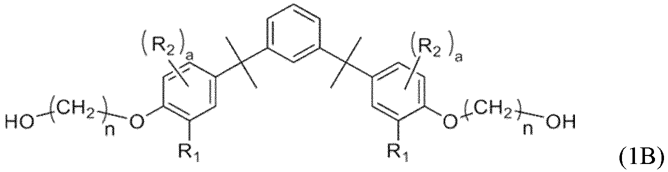

In the formula, R₁, R₂, a, and n are the same as those in general formula (1).

Each n in general formula (1B) independently represents an integer of 1 to 4, but preferably an integer of 2 to 4, more preferably 2 or 3, and particularly preferably 2.

Among 1,3-bis(1-methyl-1-phenylethyl)benzene compounds represented by general formula (1) to be used in the present invention, specific examples of Compound 1A are shown below.

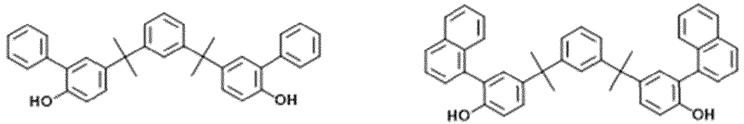

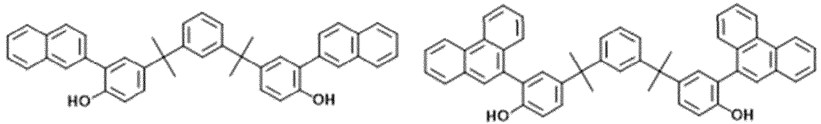

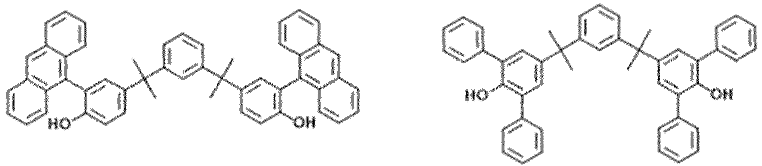

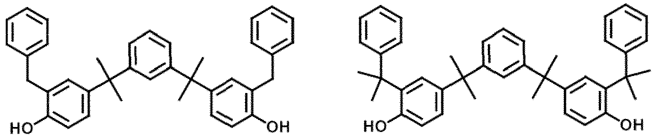

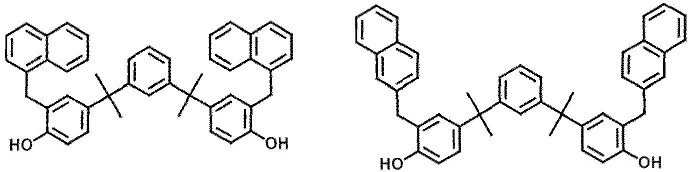

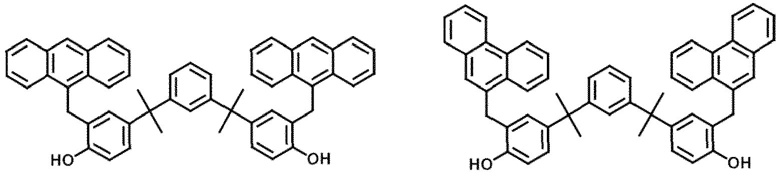

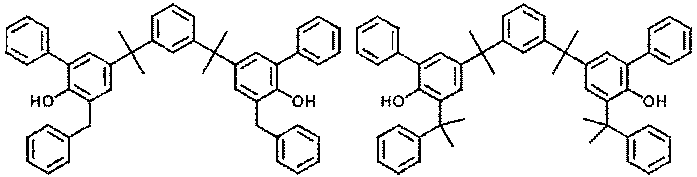

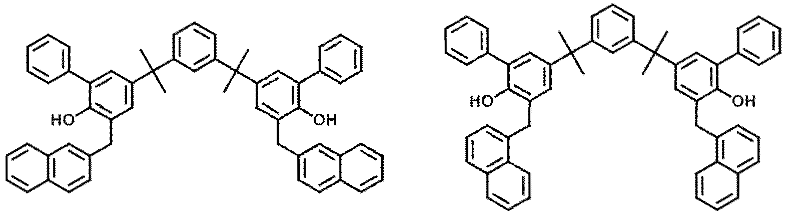

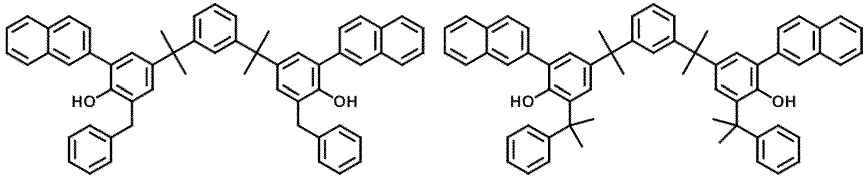

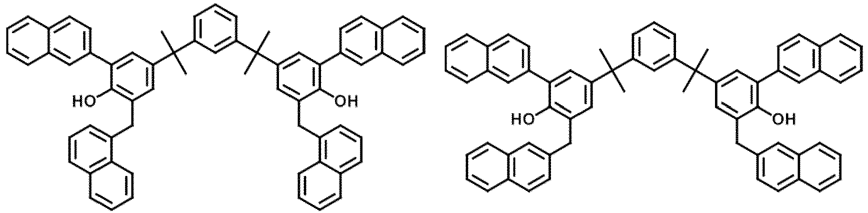

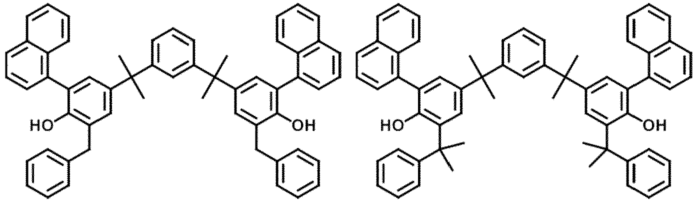

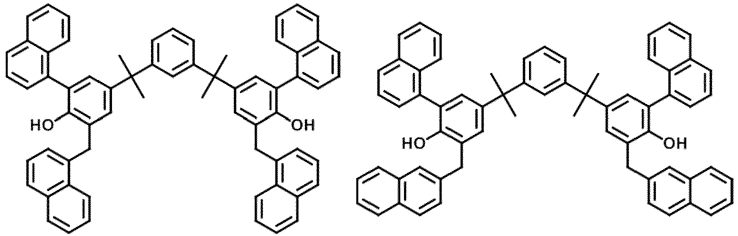

### <Method-1 for Producing Monomer>

Regarding the 1,3-bis(1-methyl-1-phenylethyl)benzene compound represented by general formula (1) to be used in the present invention, the starting materials and method for the production thereof are not particularly limited.

Examples of the method for producing Compound 1A include a production method in which a phenol compound represented by general formula (2) is reacted with α,α,α',α'-tetramethyl-1,3-benzenedimethanol, as shown by the reaction formula below.

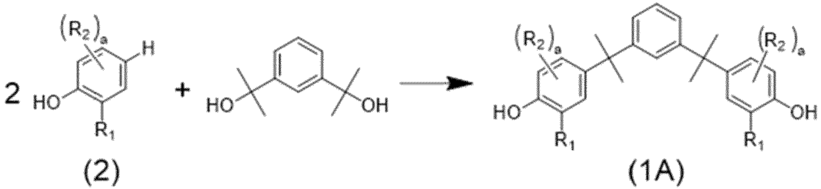

In the formula, R₁, R₂ and a are the same as those in general formula (1).

Specific examples of the phenol compound represented by general formula (2) include 2-phenylphenol, 2-(1-naphthyl)phenol, 2-(2-naphthyl)phenol, 2-(9-anthracenyl)phenol, 2-(9-phenanthryl)phenol, 2,6-diphenylphenol, 2-benzylphenol, 2-(1-methyl-1-phenylethyl)phenol, 2-(1-naphthylmethyl)phenol, 2-(2-naphthylmethyl)phenol, 2-(9-anthracenylmethyl)phenol, 2-(9-phenanthrylmethyl)phenol, 2-phenyl-6-benzylphenol, 2-phenyl-6-(1-methyl-1-phenylethyl)phenol, 2-phenyl-6-(1-naphthylmethyl)phenol, 2-phenyl-6-(2-naphthylmethyl)phenol, 2-(1-naphthyl)-6-benzylphenol, 2-(1-naphthyl)-6-(1-methyl-1-phenylethyl)phenol, 2-(1-naphthyl)-6-(1-naphthylmethyl)phenol, 2-(1-naphthyl)-6-(2-naphthylmethyl)phenol, 2-(2-naphthyl)-6-benzylphenol, 2-(2-naphthyl)-6-(1-methyl-1-phenylethyl)phenol, 2-(2-naphthyl)-6-(1-naphthylmethyl)phenol, and 2-(2-naphthyl)-6-(2-naphthylmethyl)phenol.

In the above-described production method, the amount of the phenol compound represented by general formula (2) is preferably 5 to 12 mol, more preferably 7 to 10 mol, and even more preferably 8 mol relative to 1 mol of α,α,α',α'-tetramethyl-1,3-benzenedimethanol.

The above-described production method is preferably carried out in the presence of an acid catalyst. Preferred examples of the acid catalyst include concentrated hydrochloric acid, sulfuric acid, and hydrochloric acid gas. Among them, hydrochloric acid gas is more preferably used until the reaction solution is saturated.

The reaction is usually performed in the presence of a solvent. The solvent is not particularly limited as long as it does not interfere with the reaction. Various solvents can be used since Compound 1A is easily soluble in various solvents. Among them, alcohols, which have good solubility relative to the phenol compound represented by general formula (2), are preferred; alcohols having 1 to 10 carbon atoms are more preferred; methanol, ethanol, propanol, and isopropanol are even more preferred; and methanol is particularly preferred. These solvents can be used solely or in combination.

Further, the amount of the solvent is not particularly limited as long as it does not interfere with the reaction, but usually, the solvent is used in an amount of preferably 1 to 5 times by weight, more preferably 1 to 3 times by weight, and even more preferably 1 to 2 times by weight relative to α,α,α',α'-tetramethyl-1,3-benzenedimethanol.

The above-described production method may be carried out either under air atmosphere or under inert gas atmosphere, but in order to suppress coloring of the reaction product, etc., it is preferably carried out under inert gas atmosphere such as nitrogen and argon.

The reaction temperature is usually 20 to 40°C, and preferably 25 to 30°C.

The reaction may be performed under normal pressure conditions, or under pressurized conditions, or under reduced pressure conditions, but it is preferably performed under normal pressure conditions.

The obtained reaction mixture after the completion of the reaction is subjected to separation/purification according to an ordinary method, thereby obtaining Compound 1A from the reaction mixture. For example, in order to neutralize the acid catalyst, an alkaline aqueous solution such as a sodium hydroxide aqueous solution and an ammonia aqueous solution is added to the reaction solution after the completion of the reaction to neutralize the acid catalyst. The neutralized reaction mixture is allowed to stand, and according to need, a solvent that separates from water is added thereto to separate and remove the aqueous layer. According to need, the operation in which distilled water is added to the obtained oil layer, the mixture is stirred and washed with water, and then the aqueous layer is separated and removed is performed once or a plurality of times to remove a neutralized salt. The remaining raw materials and solvents are distilled away from the obtained oil layer, thereby obtaining the objective substance, Compound 1A as a residual liquid.

Among 1,3-bis(1-methyl-1-phenylethyl)benzene compounds represented by general formula (1) to be used in the present invention, specific examples of Compound 1B are shown below.

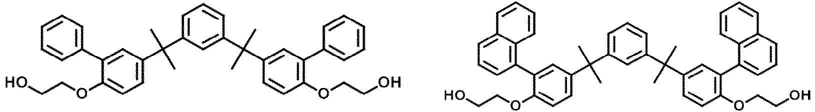

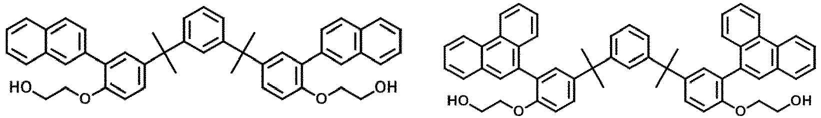

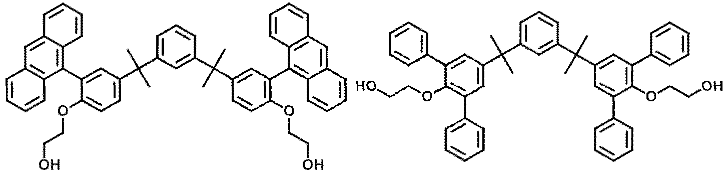

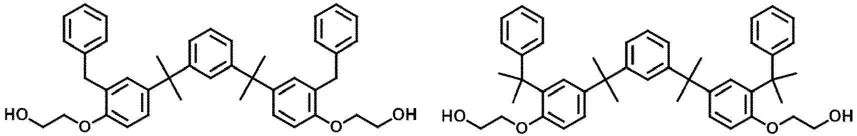

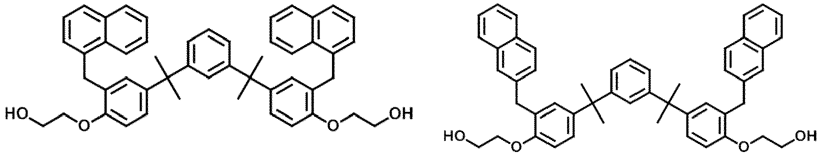

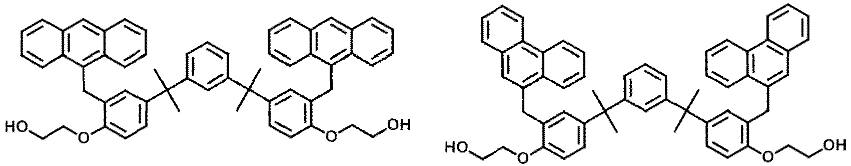

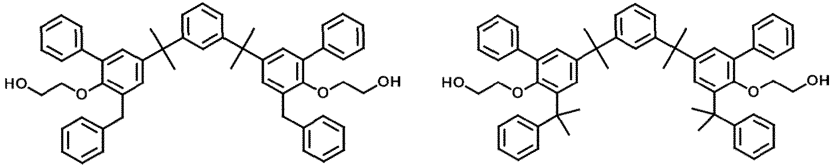

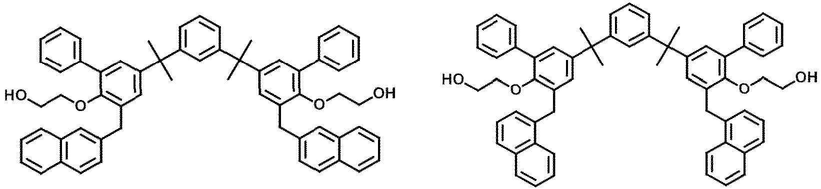

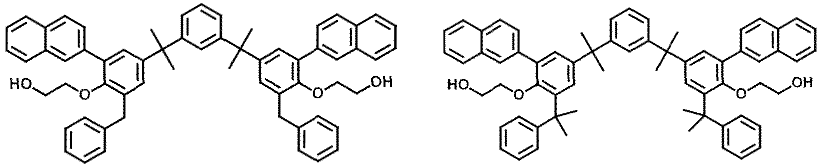

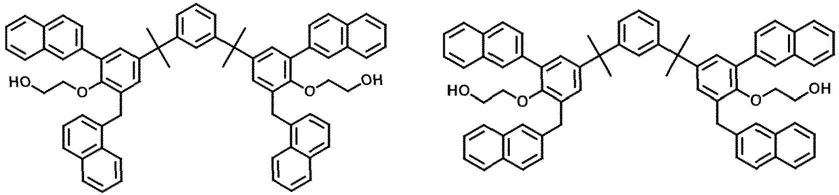

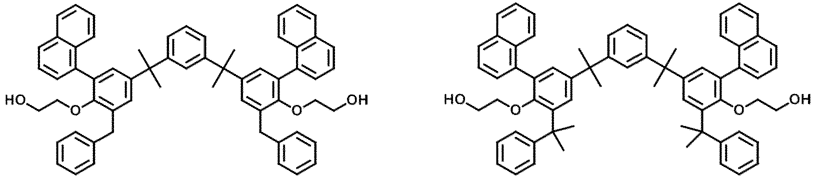

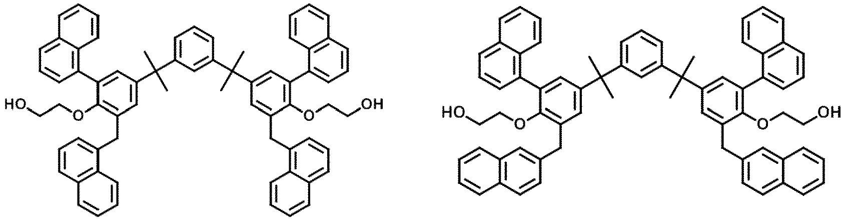

### <Method-2 for Producing Monomer>

Examples of the method for producing Compound 1B include a production method in which the compound represented by general formula (1A) is reacted with an alkyleneoxylation agent. For example, the reaction formula in the case where a carbonate represented by general formula (3) is used as the alkyleneoxylation agent is shown below.

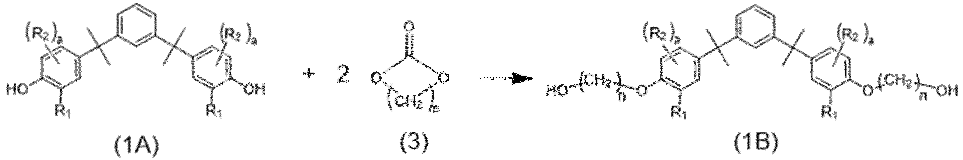

In the formula, R₁, R₂, a, and n are the same as those in general formula (1).

In the above-described production method, the compound obtained by the above-described production method-1 can be used as Compound 1A represented by general formula (1A). As the alkyleneoxylation agent, for example, a carbonate represented by general formula (3) such as ethylene carbonate, or a halogenated alcohol such as 2-chloroethanol and 3-chloro-1-propanol can be used according to an intended compound.

Hereinafter, the case where the carbonate represented by general formula (3) is used as the alkyleneoxylation agent in the above-described production method will be described.

Regarding the raw material molar ratio between Compound 1A and the carbonate, Compound 1A/the carbonate is usually about 1/2 to 1/5, preferably about 1/2 to 1/4, and more preferably about 1/2 to 1/3.

In the above-described production method, it is preferable to use a basic catalyst during the reaction, and as the basic catalyst, publicly-known ones can be used. Specific examples thereof include quaternary ammonium salts such as tetraethylammonium bromide and tetramethylammonium chloride; alkali metal halides such as potassium hydroxide, potassium iodide and sodium bromide; triorganophosphine compounds such as triphenylphosphine and tributylphosphine; amine catalysts such as 1-methylimidazole; and alkali catalysts such as potassium carbonate, calcium carbonate, magnesium carbonate, magnesium hydroxide, calcium hydroxide, sodium hydroxide, sodium hydrogen carbonate, sodium methoxide and sodium phenoxide. These basic catalysts may be used solely, or two or more of them may be used in combination.

The amount of the basic catalyst is 0.001 to 10% by weight, and preferably 0.01 to 1% by weight relative to Compound 1A represented by general formula (1A).

The reaction can be performed without a solvent by using an excess amount of the carbonate, but from the viewpoint of economic efficiency and operability, it is usually preferable to perform the reaction using an organic solvent.

In the case of using a reaction solvent, various publicly-known reaction-inert solvents can be used. Examples of the reaction solvent include aromatic hydrocarbons such as toluene and xylene; ether-based solvents such as tetrahydrofuran, dioxane and 1,2-dimethoxyethane; ketone-based solvents such as acetone and methyl isobutyl ketone; halogenated hydrocarbons such as chloroform and 1,2-dichloroethane; aliphatic alcohols such as butanol and ethylene glycol; and polar solvents such as dimethylformamide and dimethyl sulfoxide.

The amount of the reaction solvent is not particularly limited, but it is preferably 0.5 to 10 times by weight, and more preferably 0.5 to 5 times by weight relative to Compound 1A.

The above-described production method may be carried out either under air atmosphere or under inert gas atmosphere, but in order to suppress coloring of the reaction product, etc., it is preferably carried out under inert gas atmosphere such as nitrogen and argon.

The reaction temperature is not particularly limited as long as it is a temperature at which the reaction proceeds, but the reaction is usually performed under heating conditions. For example, the reaction is performed at 100°C to 250°C, and preferably performed under reflux of the solvent.

The reaction time varies depending on the reaction temperature, the carbonate used, the amount and type of the basic catalyst, etc., but the reaction is usually performed for about 3 to 24 hours. In the reaction, the time point at which the generation of carbon dioxide gas stops can be regarded as an indication of the completion of the reaction.

The obtained reaction mixture after the completion of the reaction is subjected to separation/purification according to an ordinary method, thereby obtaining Compound 1B from the reaction mixture.

In the case of using the basic catalyst, an acid-containing water (for example, hydrochloric acid, or sulfuric acid), acetic acid, propionic acid or the like is added thereto to perform neutralization. The step of neutralization may be performed after the step of hydrolysis which will be described later.

In this reaction, since an excess amount of the carbonate is added, the carbonate remains in the reaction solution even after the reaction is completed. When treatments such as heating are carried out in this state, there is a possibility that a side reaction may proceed and that the purity and yield of Compound 1B as an intended compound may be reduced. For this reason, it is preferable to add water to carry out the step of hydrolysis of the carbonate. The amount of water is 1 to 10 times by mole relative to the amount of the carbonate used in the above-described reaction.

The temperature is not limited as long as it is lower than the boiling point of the reaction solution, but it is usually in the range from room temperature to a temperature lower than the boiling point of the reaction solution. Specifically, the lower limit is 10°C or higher, and more preferably 20°C or higher. The upper limit varies depending on the boiling point of a solvent to be used, but it is preferably 150°C or lower.

After that, a solvent that separates from water is added according to need, and then an oil layer is washed with water a plurality of times, an aqueous layer is separated and removed, low boiling point substances such as the solvent are removed from the obtained oil layer by distillation under reduced pressure, and then post-treatment operations such as separation by means of washing with water, crystallization, filtration, distillation, column chromatography, etc. and drying can be performed. In order to further improve the purity, purification by means of distillation, recrystallization, column chromatography, etc. may be further performed according to ordinary methods.

Among Compounds 1B to be used in the present invention, a crystal of 1,3-bis[1-methyl-1-(4-(2-hydroxyethoxy)-3-phenylphenyl)ethyl]benzene represented by formula (15) below can be handled as a crystalline solid, and for this reason, it is excellent in handleability and transportability in the industrial production of thermoplastic resins and therefore is very useful.

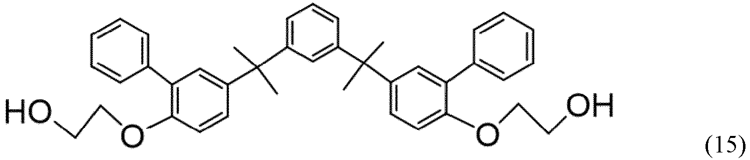

Regarding the crystal of 1,3-bis[1-methyl-1-(4-(2-hydroxyethoxy)-3-phenylphenyl)ethyl]benzene represented by formula (15) above, the endothermic peak top temperature according to differential scanning calorimetry is 134 to 140°C, more preferably 135 to 139°C, and particularly preferably 136 to 139°C.

Further, in the powder X-ray diffraction peak pattern (using Cu-Kα radiation), the crystal of 1,3-bis[1-methyl-1-(4-(2-hydroxyethoxy)-3-phenylphenyl)ethyl]benzene represented by formula (15) above has diffraction peaks at diffraction angle 20 of 7.9±0.2°, 10.8±0.2°, 16.3±0.2° and 18.6±0.2°. In addition, the crystal may have peaks at diffraction angle 2θ of 12.8±0.2°, 14.9±0.2°, 20.2±0.2° and 24.1±0.2°.

The purity of the crystal of 1,3-bis[1-methyl-1-(4-(2-hydroxyethoxy)-3-phenylphenyl)ethyl]benzene represented by formula (15) above is preferably 90% or more, more preferably 93% or more, even more preferably 95% or more, and particularly preferably 98% or more in terms of area percentage according to liquid chromatography analysis.

The crystal of the compound represented by formula (15) above can be obtained by precipitation from a solution in which the compound is dissolved in a chain aliphatic ketone solvent having 5 to 8 carbon atoms. As the compound, one obtained by the above-described method can be used. Precipitation from a solution in which the compound represented by formula (15) above is dissolved in a chain aliphatic ketone solvent having 5 to 8 carbon atoms can be performed by cooling the solution or distilling off the solvent in the solution, but preferably, a chain or cyclic aliphatic hydrocarbon solvent having 5 to 10 carbon atoms is mixed with the solution in which the compound is dissolved in the chain aliphatic ketone solvent having 5 to 8 carbon atoms, and according to need, the obtained solution is cooled in order to further reduce the solubility of the solution of the compound to perform precipitation.

As the chain aliphatic ketone solvent having 5 to 8 carbon atoms, diethyl ketone (having 5 carbon atoms), methyl isobutyl ketone (having 6 carbon atoms), methyl amyl ketone (having 7 carbon atoms), methyl hexyl ketone (having 8 carbon atoms), etc. can be used, and among them, methyl isobutyl ketone and methyl amyl ketone are preferred. When using such an organic solvent, it is possible to wash a solution with water to remove water-soluble impurities such as salts before precipitation of crystal.

The amount of the chain aliphatic ketone solvent is preferably 1 to 7 times by weight, more preferably 1.5 to 6 times by weight, and even more preferably 2 to 5 times by weight relative to the weight of the compound represented by formula (15) above.

As the chain or cyclic aliphatic hydrocarbon solvent having 5 to 10 carbon atoms, pentane, hexane, heptane, octane, isooctane, cyclopentane, cyclohexane, etc. can be used, and among them, a cyclic aliphatic hydrocarbon solvent having 5 to 10 carbon atoms is preferred, and cyclopentane or cyclohexane is more preferred.

The amount of the aliphatic hydrocarbon solvent is preferably 1 to 10 times by weight, more preferably 1 to 7 times by weight, and even more preferably 1 to 5 times by weight relative to the amount of the compound represented by formula (15) above.

The temperature at which the chain or cyclic aliphatic hydrocarbon solvent having 5 to 10 carbon atoms is mixed with the chain aliphatic ketone solution having 5 to 8 carbon atoms containing the compound represented by formula (15) above varies depending on the chain aliphatic ketone solution to be used, but the temperature is preferably 60 to 120°C, more preferably 60 to 100°C, and even more preferably 60 to 90°C.

The temperature at which precipitation of crystal of the compound represented by formula (15) above is started is preferably 10 to 50°C, and more preferably 15 to 40°C.

The crystal obtained by the above-described method may be isolated according to an ordinary method, and for example, the crystal can be isolated by means of centrifugal filtration or the like. Preferably, the crystal is further subjected to washing with a solvent. By drying the crystal obtained, the solvent used can be removed.

The thermoplastic resin according to be used in the present invention is not particularly limited, and examples thereof include a polyester resin, a polycarbonate resin, a polyester carbonate resin, an epoxy resin, a polyurethane resin, a polyacrylate resin, and a polymethacrylate resin. Preferably, the thermoplastic resin is a polycarbonate resin, a polyester carbonate resin or a polyester resin, and more preferably, the thermoplastic resin contains a structural unit (A) represented by formula below:

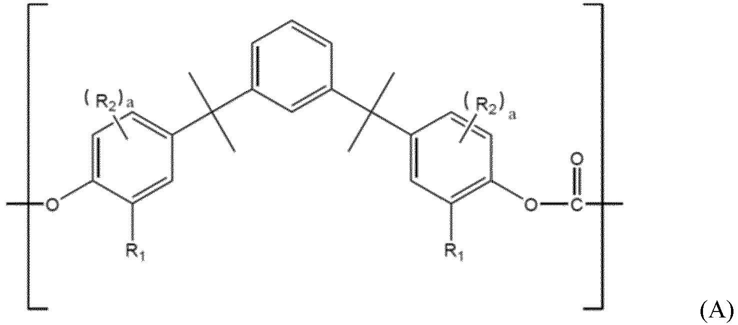

In the formula, R₁, R₂ and a are the same as those in general formula (1).

In the thermoplastic resin to be used in one embodiment of the present invention, the ratio of the constituent unit (A) represented by the above formula in all constituent units is not particularly limited. The ratio of the constituent unit (A) is preferably 1 to 80 mole %, more preferably 1 to 60 mole %, and particularly preferably 5 to 50 mole %, in all constituent units.

That is to say, the thermoplastic resin to be used in in one embodiment of the present invention may comprise constituent units derived from aliphatic dihydroxy compounds and constituent units derived from aromatic dihydroxy compounds, which are generally used as constituent units of polycarbonate resins or polyester carbonate resins, in addition to the constituent unit (A) represented by the above-described formula.

Specifically, the aliphatic dihydroxy compound includes various compounds, and particular examples thereof may include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

The aromatic dihydroxy compound includes various compounds, and particular examples thereof may include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, and bis(4-hydroxyphenyl)ketone, and bisphenoxyethanol fluorene.

Moreover, the thermoplastic resin to be used in one embodiment of the present invention preferably comprises a constituent unit (B) derived from a monomer represented by the following general formula (6).

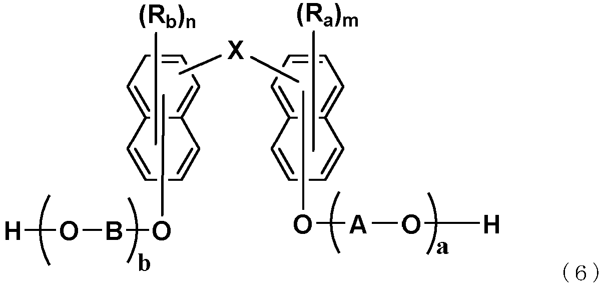

In the general formula (6), Rₐ and R_{b} are each independently selected from the group consisting of a halogen atom, a C1-C20 alkyl group optionally having a substituent, a C1-C20 alkoxy group optionally having a substituent, a C5-C20 cycloalkyl group optionally having a substituent, a C5-C20 cycloalkoxy group optionally having a substituent, a C6-C20 aryl group optionally having a substituent, a C6-C20 heteroaryl group optionally having a substituent, which contains one or more heterocyclic atoms selected from O, N and S, a C6-C20 aryloxy group optionally having a substituent, and - C≡C-Rₕ. Herein, Rₕ represents a C6-C20 aryl group optionally having a substituent, or a C6-C20 heteroaryl group optionally having a substituent, which contains one or more heterocyclic atoms selected from O, N and S.

Rₐ and R_{b} are preferably a hydrogen atom, a C6-C20 aryl group optionally having a substituent, or a C6-C20 heteroaryl group optionally having a substituent, which contains one or more heterocyclic atoms selected from O, N and S; more preferably a hydrogen atom or a C6-C20 aryl group optionally having a substituent; and further preferably a hydrogen atom or a C6-C12 aryl group optionally having a substituent.

In the general formula (6), X represents a single bond or a fluorene group optionally having a substituent. X is preferably a single bond, or a fluorene group optionally having a substituent, in which a total carbon number is 12 to 20.

In the general formula (6), A and B each independently represent a C1-C5 alkylene group optionally having a substituent, and each independently preferably represent an alkylene group containing 2 or 3 carbon atoms.

In the general formula (6), m and n each independently represent an integer of 0 to 6, preferably an integer of 0 to 3, and more preferably 0 or 1.

In the general formula (6), a and b each independently represent an integer of 0 to 10, preferably an integer of 1 to 3, and more preferably 1 or 2.

Specific examples of the constituent unit (B) may include those derived from 2,2'-bis(2-hydroxyethoxy)-1,1'-binaphthalene (BNE), DPBHBNA, and the like.

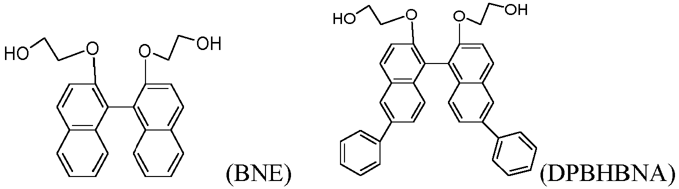

Furthermore, the thermoplastic resin to be used in in one embodiment of the present invention preferably has a constituent unit (C) derived from a monomer represented by the following general formula (7).

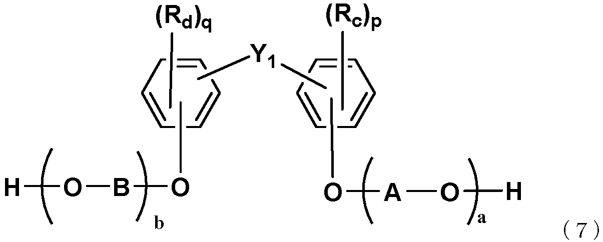

In the general formula (7), R_{c} and R_{d} are each independently selected from the group consisting of a halogen atom, a C1-C20 alkyl group optionally having a substituent, a C1-C20 alkoxy group optionally having a substituent, a C5-C20 cycloalkyl group optionally having a substituent, a C5-C20 cycloalkoxy group optionally having a substituent, and a C6-C20 aryl group optionally having a substituent.

R_{c} and R_{d} are preferably a hydrogen atom, a C6-C20 aryl group optionally having a substituent, or a C6-C20 heteroaryl group optionally having a substituent, which contains one or more heterocyclic atoms selected from O, N and S; more preferably a hydrogen atom or a C6-C20 aryl group optionally having a substituent; and further preferably a hydrogen atom or a C6-C12 aryl group optionally having a substituent.

In the general formula (7), Y₁ represents a single bond, a fluorene group optionally having a substituent, or any one of structural formulae represented by the following formulae (8) to (14); and preferably represents a single bond or a structural formula represented by the following formula (8).

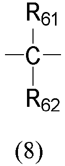

-S- (9)

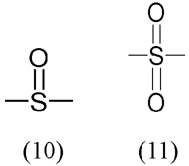

-(CH₂)ᵣ- (12)

-O- (13)

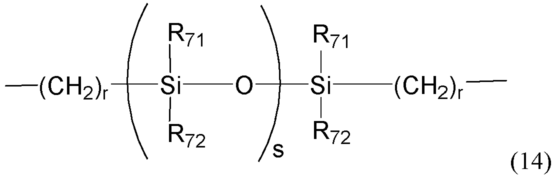

In the formulae (8) to (14), R₆₁, R₆₂, R₇₁ and R₇₂ each independently represent a hydrogen atom, a halogen atom, a C1-C20 alkyl group optionally having a substituent, or a C6-C30 aryl group optionally having a substituent, or represent a C1-C20 carbon ring or heterocyclic ring optionally having a substituent, which is formed by the binding between R₆₁ and R₆₂ or the binding between R₇₁ and R₇₂.

In the formulae (8) to (14), r and s each independently represent an integer of 0 to 5000.

In the general formula (7), A and B each independently represent a C1-C5 alkylene group optionally having a substituent, or each independently preferably represent an alkylene group containing 2 or 3 carbon atoms. In the general formula (7), p and q each independently represent an integer of 0 to 4, and preferably 0 or 1. In addition, in the general formula (7), a and b each independently represent an integer of 0 to 10, preferably an integer of 0 to 5, more preferably an integer of 0 to 2, and for example, 0 or 1.

Specific examples of the structural unit (C) include structural units derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis[6-(2-hydroxyethoxy)naphthalen-2-yl]fluorene (BNEF), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidene bisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanol fluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), TrisP-HAP (4,4',4"-ethylidene trisphenol), 1,1-bis(4-hydroxyphenyl)-1-phenylethane (BPAP), 1,1-bis(4-hydroxyphenyl)cyclododecane (HPCD), 1,1-bis(4-hydroxyphenyl)cyclohexane (BPZ), 9,9-bis(4-hydroxy-3-methylphenyl)fluorene (BCFL), bis(4-hydroxyphenyl)diphenylmethane (BPBP), 1,3-bis(1-methyl-1-phenylethyl)benzene (BPM), or the like. Among them, structural units derived from BPEF, BNEF or BCFL are preferred examples of the structural unit (C).

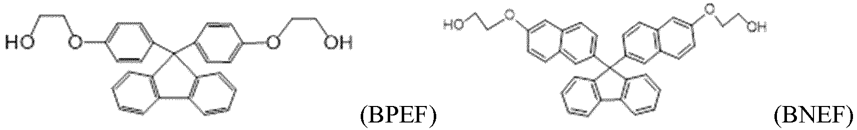

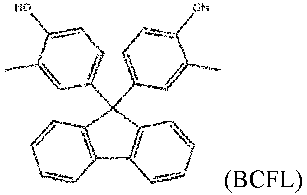

While the structural unit (A) is essential to the thermoplastic resin to be used in one embodiment of the present invention, the thermoplastic resin may be a polymer that contains the structural unit (B) but not the structural unit (C), a polymer that contains the structural unit (C) but not the structural unit (B), a copolymer having the structural unit (B) and the structural unit (C), a mixture of a polymer having the structural unit (B) and a polymer having the structural unit (C), or a combination thereof. Examples of the polymer that contains the structural unit (C) but not the structural unit (B) include those having the structural units represented by formulae (I-1) to (I-3) below. Examples of the copolymer having the structural unit (B) and the structural unit (C) include those having the structural units represented by formulae (II-1) to (II-4) below.

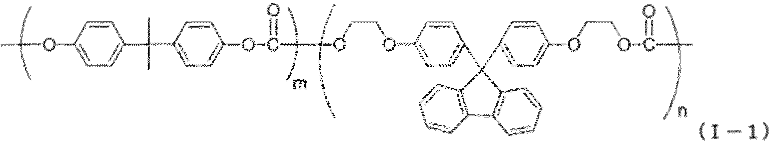

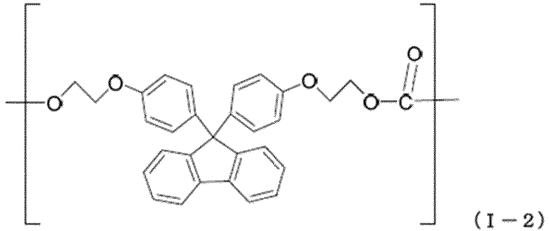

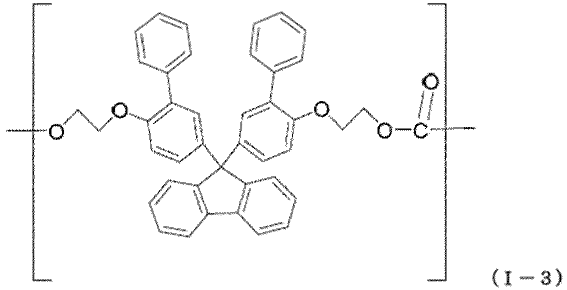

(In formula (I-1), m and n each independently represent an integer of 1 to 10, preferably an integer of 1 to 5, and more preferably 1, and
the number of repeating units in formula (I-3) is an integer of 1 to 10, preferably an integer of 1 to 5, and more preferably 1.)

Although either a block copolymer in which the values of m and n are high (e.g., 100 or higher) or a random copolymer can be used as a polymer having a plurality of types of structural units, it is preferable to use a random copolymer, and it is more preferable to use a random copolymer in which m and n are 1.

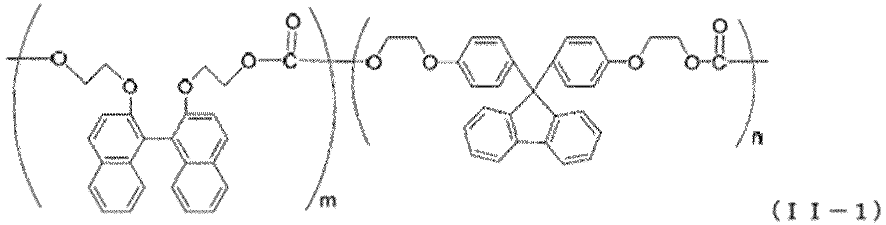

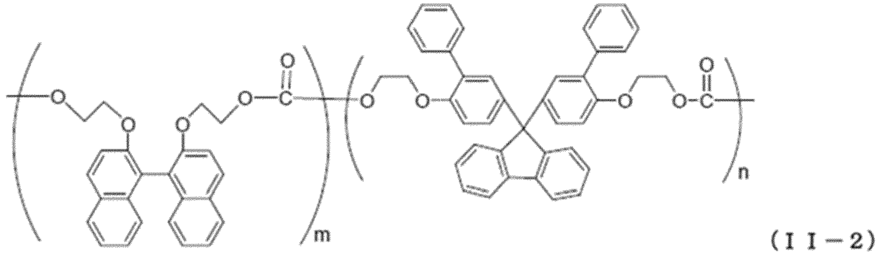

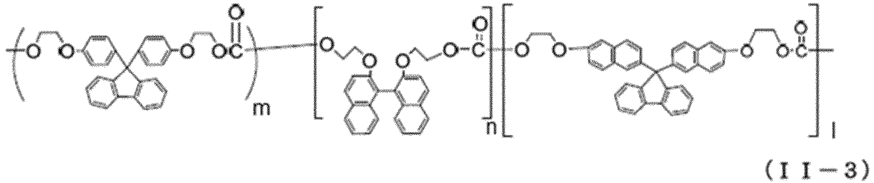

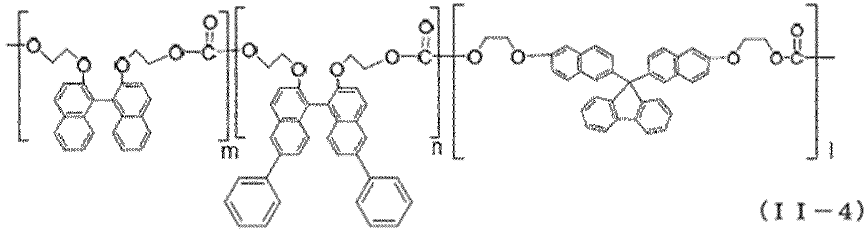

(In formulae (II-1) to (II-4), m and n each independently represent an integer of 1 to 10, preferably an integer of 1 to 5, and more preferably 1.)

Although either a block copolymer in which the values of m and n (or m, n and l) are high (e.g., 100 or higher) or a random copolymer can be used as a polymer having a plurality of types of structural units, it is preferable to use a random copolymer, and it is more preferable to use a random copolymer in which m and n (or m, n and l) are 1.

In the copolymer, the molar ratio between the structural unit (B) and the structural unit (C) is preferably 1:99 to 99:1, more preferably 10:90 to 90:10, even more preferably 15:85 to 85:15, and particularly preferably 30:70 to 70:30. Further, in the mixture, the mass ratio between the polymer having the structural unit (B) and the polymer having the structural unit (C) is preferably 1:99 to 99:1, more preferably 10:90 to 90:10, even more preferably 15:85 to 85:15, and particularly preferably 30:70 to 70:30.

The thermoplastic resin to be used in one embodiment of the present invention preferably further contains a structural unit derived from at least one monomer selected from the group of monomers below.

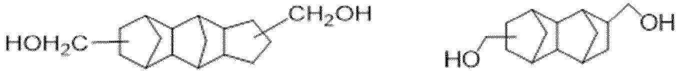

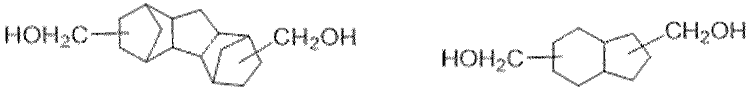

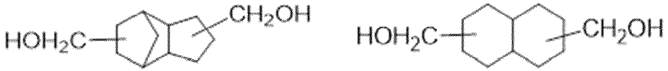

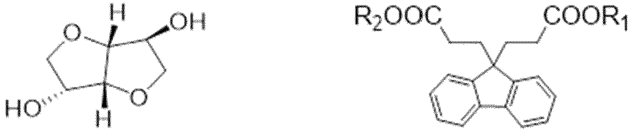

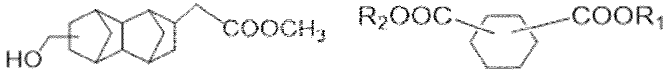

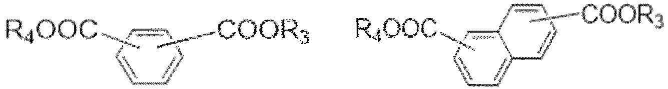

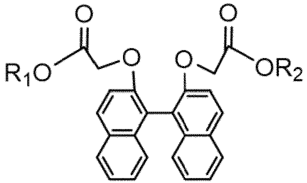

(In the formulae above, R₁ and R₂ each independently represent a hydrogen atom, a methyl group or an ethyl group, and R₃ and R₄ each independently represent a hydrogen atom, a methyl group, an ethyl group or an alkylene glycol having 2 to 5 carbon atoms.)

Further, the thermoplastic resin to be used in one embodiment of the present invention preferably has a structural unit (D) derived from a monomer represented by general formula (16) below. In this case, the content of the structural unit (D) derived from the monomer represented by general formula (16) is preferably 1 to 50 mol%, and more preferably 1 to 30 mol% relative to all the structural units.

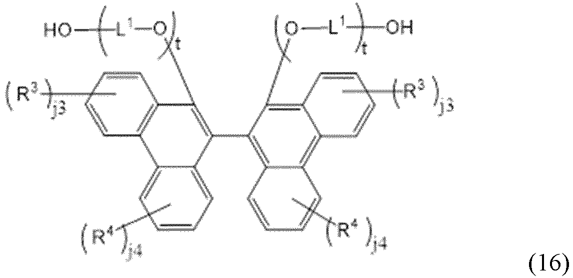

**In** general formula (16):
each L¹ independently represents a divalent linking group;
R³ and R⁴ each independently represent a halogen atom or a substituent having 1 to 20 carbon atoms which may contain an aromatic group;
j3 and j4 each independently represent an integer of 0 to 4; and
t represents an integer of 0 or 1.

In general formula (16) above, each L¹ independently represents a divalent linking group. L¹ is preferably an alkylene group having 1 to 12 carbon atoms which may have a substituent, more preferably an alkylene group having 1 to 5 carbon atoms, even more preferably an alkylene group having 2 or 3 carbon atoms, and particularly preferably an ethylene group. Examples of the substituent of the alkylene group of L¹ include an alkyl group, a cycloalkyl group, an aryl group, an alkoxyl group, and a combination thereof, and specific examples thereof include a methyl group, an ethyl group, an n-propyl group, an isopropyl group, a phenyl group, a methoxy group, and an ethoxy group.

When present, R³ and R⁴ each independently represent a halogen atom or a substituent having 1 to 20 carbon atoms which may contain an aromatic group. Examples of the halogen atom include a fluorine atom, a chlorine atom, and a bromine atom, and examples of the substituent having 1 to 20 carbon atoms which may contain an aromatic group include a methyl group, a phenyl group, a naphthyl group, a thienyl group, and a benzothienyl group. Examples of the naphthyl group include a 1-naphthyl group and a 2-naphthyl group, and examples of the thienyl group include a 2-thienyl group and a 3-thienyl group. Examples of the benzothienyl group include a 2-benzo[b]thienyl group and a 3-benzo[b]thienyl group. These groups may further have a substituent, and examples of such substituents include, but are not limited to, those described above as substituents of the alkylene group of L¹.

j3 and j4 each independently represent an integer of 0 to 4. j3 and j4 are preferably an integer of 0 to 2, more preferably 0 or 1, and particularly preferably 0.

t represents an integer of 0 or 1, and preferably 1.

The monomer represented by general formula (16) preferably has a structure represented by formula (16') below.

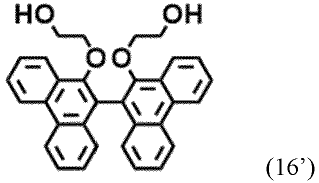

The polycarbonate resin to be used in one preferred embodiment of the present invention may comprise, as impurities, an alcoholic compound that may be generated as a by-product upon the production thereof, such as a phenolic compound, or a diol component or a carbonic acid diester that has not reacted and remains, in some cases.

Such an alcoholic compound such as a phenolic compound, and such a carbonic acid diester, which are comprised as impurities, may cause a reduction in the strength of the resulting molded body or generation of odors. Accordingly, the smaller the contents of these compounds, the better.

The content of the remaining phenolic compound is preferably 3000 ppm by mass or less, more preferably 1000 ppm by mass or less, particularly preferably 300 ppm by mass or less, with respect to 100% by mass of the polycarbonate resin.

The content of the remaining diol component is preferably 1000 ppm by mass or less, more preferably 100 ppm by mass or less, and particularly preferably 10 ppm by mass or less, with respect to 100% by mass of the polycarbonate resin.

The content of the remaining carbonic acid diester is preferably 1000 ppm by mass or less, more preferably 100 ppm by mass or less, and particularly preferably 10 ppm by mass or less, with respect to 100% by mass of the polycarbonate resin.

In particular, it is preferable that the contents of compounds such as phenol and t-butyl phenol are small, and it is preferable that the contents of these compounds are within the above-described range.

The content of a phenolic compound remaining in the polycarbonate resin can be measured by a method of analyzing a phenolic compound extracted from the polycarbonate resin, using gas chromatography.

The content of an alcoholic compound remaining in the polycarbonate resin can also be measured by a method of analyzing an alcoholic compound extracted from the polycarbonate resin, using gas chromatography.

The contents of a diol component and a carbonic acid diester remaining in the polycarbonate resin can also be measured by a method of extracting these compounds from the polycarbonate resin, and then analyzing them using gas chromatography.

The contents of a by-product alcoholic compound such as a phenolic compound, a diol component, and a carbonic acid diester may be reduced to such an extent that these compounds are undetectable. However, from the viewpoint of productivity, the polycarbonate resin may comprise very small amounts of these compounds in a range in which the compounds do not impair the effects of the present invention. In addition, plasticity can be improved upon the melting of the resin, if the resin may comprise very small amounts of the compounds.

The content of the remaining phenolic compound, diol component or carbonic acid diester may each be, for example, 0.01 ppm by mass or more, 0.1 ppm by mass or more, or 1 ppm by mass or more, with respect to 100% by mass of the polycarbonate resin.

The content of the remaining alcoholic compound may be, for example, 0.01 ppm by mass or more, 0.1 ppm by mass or more, or 1 ppm by mass or more, with respect to 100% by mass of the polycarbonate resin.

Besides, the contents of the by-product alcoholic compound such as a phenolic compound, the diol component and the carbonic acid diester in the polycarbonate resin can be regulated to be within the above-described ranges by appropriately adjusting conditions for polycondensation or the setting of apparatuses. Otherwise, the contents of these compounds can also be regulated by determining conditions for an extrusion step after completion of the polycondensation.

For example, the amount of the remaining by-product alcoholic compound such as a phenolic compound is related to the type of carbonic acid diester used in the polymerization of the polycarbonate resin, the temperature applied to the polymerization reaction, the polymerization pressure, etc. By adjusting these conditions, the amount of the remaining by-product alcoholic compound such as a phenolic compound can be reduced.

For example, when the polycarbonate resin is produced using dialkyl carbonate such as diethyl carbonate, the molecular weight is hardly increased, and low-molecular-weight polycarbonate is thereby obtained, so that the content of an alcoholic compound generated as a by-product tends to be increased. Such alkyl alcohol has high volatility, and thus, if it remains in the polycarbonate resin, the moldability of the resin tends to be deteriorated. In addition, when the amount of the remaining by-product alcoholic compound such as a phenolic compound is large, it is likely that problems regarding odor occur upon the molding of the resin, or it is also likely that the cleavage reaction of a resin skeleton progresses upon compounding, and a reduction in the molecular weight thereby occurs. Therefore, the content of the by-product alcoholic compound remaining in the obtained polycarbonate resin is preferably 3000 ppm by mass or less, with respect to the amount of the polycarbonate resin (100% by mass). The content of the remaining alcoholic compound is preferably 3000 ppm by mass or less, more preferably 1000 ppm by mass or less, and particularly preferably 300 ppm by mass or less, with respect to 100% by mass of the polycarbonate resin.

### <Physical Properties of Thermoplastic Resin>

### (1) Refractive Index (nD)

In one embodiment of the present invention, one of the characteristics of the thermoplastic resin is a high refractive index. The refractive index is preferably 1.600 to 1.700, more preferably 1.626 to 1.700, and particularly preferably 1.630 to 1.650. In the present invention, the refractive index can be measured by the method described in the Examples below.

### (2) Abbe Number (v)

In one embodiment of the present invention, the Abbe number of the thermoplastic resin is preferably 22.0 to 26.0, more preferably 23.0 to 26.0, and particularly preferably 23.0 to 24.7. In the present invention, the Abbe number can be measured by the method described in the Examples below.

### (3) Glass Transition Temperature (Tg)

In one embodiment of the present invention, one of the characteristics of the thermoplastic resin is high heat resistance, and the glass transition temperature (Tg) is preferably 70 to 200°C, more preferably 100 to 200°C, even more preferably 100 to 150°C, still more preferably 125 to 150°C, yet more preferably 125 to 145°C, and particularly preferably 125 to 140°C. In the present invention, the glass transition temperature can be measured by the method described in the Examples below.

### (4) Polystyrene-Equivalent Weight-Average Molecular Weight (Mw)

In one embodiment of the present invention, the polystyrene-equivalent weight-average molecular weight of the thermoplastic resin is preferably 10,000 to 100,000, more preferably 10,000 to 80,000, and particularly preferably 10,000 to 60,000.

### (5) Photoelastic Coefficient

In one embodiment of the present invention, one of the characteristics of the thermoplastic resin is a low photoelastic coefficient. The photoelastic coefficient is preferably 25 to 45, more preferably 25 to 38, and particularly preferably 30 to 38. In the present invention, the photoelastic coefficient can be measured by the method described in the Examples below.

### < Thermoplastic resin composition >

Another embodiment of the present invention relates to an optical lens including a thermoplastic resin composition comprising the aforementioned thermoplastic resin and additives. The thermoplastic resin composition of the present embodiment may also comprise a resin other than the thermoplastic resin to be used in the present invention comprising the aforementioned constituent unit (A), in a range in which such a resin does not impair the desired effects of the present embodiment. Such a resin is not particularly limited, and it may be, for example, at least one resin selected from the group consisting of a polycarbonate resin, a polyester resin, a polyester carbonate resin, a (meth)acrylic resin, a polyamide resin, a polystyrene resin, a cycloolefin resin, an acrylonitrile-butadiene-styrene copolymer resin, a vinyl chloride resin, a polyphenylene ether resin, a polysulfone resin, a polyacetal resin, and a methyl methacrylate-styrene copolymer resin. Various types of known resins can be used as such resins, and one type of such resin alone can be added to, or a combination of two or more types of such resins can be added to the thermoplastic resin composition.

### [Antioxidant]

The thermoplastic resin composition preferably comprises an antioxidant as an additive described above.

As such an antioxidant, the thermoplastic resin composition preferably comprises at least one of a phenolic antioxidant and a phosphite-based antioxidant.

Examples of the phenolic antioxidant may include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazine-2,4,6(1H,3H,5H)-trione, 4,4',4"-(1-methylpropanyl-3-ylidene)tris(6-tert-butyl-m-cresol), 6,6'-di-tert-butyl-4,4'-butylidenedi-m-cresol, octadecyl 3-(3,5-di-tert-butyl-4-hydroxyphenyl)propionate, pentaerythritol-tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate]. Among these, pentaerythritol-tetrakis[3-(3,5-di-tert-butyl-4-hydroxyphenyl)propionate] is preferable.

Examples of the phosphite-based antioxidant may include 2-ethylhexyl diphenyl phosphite, isodecyl diphenyl phosphite, triisodecyl phosphite, triphenyl phosphite, 3,9-bis(octadecyloxy)-2,4,8,10-tetraoxy-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2'-methylenebis(4,6-di-tert-butylphenyl)2-ethylhexyl phosphite, tris(2,4-ditert-butylphenyl) phosphite, tris(nonylphenyl) phosphite, tetra-C12-15-alkyl(propane-2,2-diylbis(4,1-phenylene)) bis(phosphite), and 3,9-bis(2,6-di-tert-butyl-4-methylphenoxy)-2,4,8,10-tetraoxa-3,9-diphosphaspiro[5.5]undecane. Among these, 3,9-bis(2,6-di-tert-butyl-4-methylphenoxy)-2,4,8, 10-tetraoxa-3,9-diphosphaspiro[5.5]undecane is preferable.

As such antioxidants, the aforementioned compounds may be used alone as a single type, or may also be used as a mixture of two or more types.

The antioxidant is preferably comprised in the thermoplastic resin composition in an amount of 1 ppm by weight to 3000 ppm by weight, with respect to the total weight of the resin composition. The content of the antioxidant in the thermoplastic resin composition is more preferably 50 ppm by weight to 2500 ppm by weight, further preferably 100 ppm by weight to 2000 ppm by weight, particularly preferably 150 ppm by weight to 1500 ppm by weight, and further particularly preferably 200 ppm by weight to 1200 ppm by weight.

### [Release agent]

The thermoplastic resin composition preferably comprises a release agent as an additive described above.

Examples of the release agent may include ester compounds including glycerin fatty acid esters such as mono/diglyceride of glycerin fatty acid, glycol fatty acid esters such as propylene glycol fatty acid ester and sorbitan fatty acid ester, higher alcohol fatty acid esters, full esters of aliphatic polyhydric alcohol and aliphatic carboxy acid, and monofatty acid esters. When an ester of aliphatic polyhydric alcohol and aliphatic carboxy acid is used as a release agent, any of a monoester, a full ester, and the like can be adopted. For example, those other than full esters, such as a monoester, may be used.

Specific examples of the release agent may include the following substances: namely,
sorbitan fatty acid esters, such as sorbitan stearate, sorbitan laurate, sorbitan oleate, sorbitan trioleate, sorbitan tribehenate, sorbitan stearate, sorbitan tristearate, and sorbitan caprylate;
propylene glycol fatty acid esters, such as propylene glycol monostearate, propylene glycol monooleate, propylene glycol monobehenate, propylene glycol monolaurate, and propylene glycol monopalmitate;
higher alcohol fatty acid esters, such as stearyl stearate;
glycerin fatty acid ester monoglycerides, which include: monoglycerides including glycerin monostearate, glycerin monohydroxystearate such as glycerin mono-12-hydroxystearate, glycerin monooleate, glycerin monobehenate, glycerin monocaprylate, glycerin monocaprate and glycerin monolaurate; and mono/diglycerides including glycerin mono/distearate, glycerin mono/distearate, glycerin mono/dibehenate, glycerin mono/dioleate;
acetylated monoglycerides of glycerin fatty acid esters, such as glycerin diacetomonolaurate;
organic acid monoglycerides of glycerin fatty acid esters, such as citric acid fatty acid monoglyceride, succinic acid fatty acid monoglyceride, and diacetyl tartaric acid fatty acid monoglyceride; and
polyglycerin fatty acid esters, such as diglycerin stearate, diglycerin laurate, diglycerin oleate, diglycerin monostearate, diglycerin monolaurate, diglycerin monomyristate, diglycerin monooleate, tetraglycerin stearate, decaglycerin laurate, decaglycerin oleate, and polyglycerin polyricinoleate.

The release agent is preferably comprised in the thermoplastic resin composition in an amount of 1 ppm by weight to 5000 ppm by weight, with respect to the total weight of the resin composition. The content of the release agent in the thermoplastic resin composition is more preferably 50 ppm by weight to 4000 ppm by weight, further preferably 100 ppm by weight to 3500 ppm by weight, particularly preferably 500 ppm by weight to 13000 ppm by weight, and further particularly preferably 1000 ppm by weight to 2500 ppm by weight.

### [Other additives]

Additives other than the aforementioned antioxidant and release agent may also be added to the thermoplastic resin composition. Examples of the additives that may be comprised in the thermoplastic resin composition may include a compounding agent, a catalyst inactivator, a thermal stabilizer, a plasticizer, a filler, an ultraviolet absorber, a rust inhibitor, a dispersant, an antifoaming agent, a leveling agent, a flame retardant, a lubricant, a dye, a pigment, a bluing agent, a nucleating agent, and a clearing agent.

The content of additives other than the antioxidant and the release agent in the thermoplastic resin composition is preferably 10 ppm by weight to 5.0% by weight, more preferably 100 ppm by weight to 2.0% by weight, and further preferably 1000 ppm by weight to 1.0% by weight, but is not limited thereto.

The aforementioned additives are likely to adversely affect transmittance. Thus, it is preferable not to add such additives excessively, and more preferably, the total additive amount is, for example, within the aforementioned range.

### < Optical lens >

The above thermoplastic resin or thermoplastic resin composition (hereinafter simply abbreviated as a "resin composition") is used in the present invention in an optical lens. The resin composition has high fluidity, and can be molded according to a cast method.

When an optical lens of the present invention comprising the resin composition is produced according to injection molding, the optical lens is preferably molded under conditions of a cylinder temperature of 260°C to 350°C and a mold temperature of 90°C to 170°C. The optical lens is more preferably molded under conditions of a cylinder temperature of 270°C to 320°C and a mold temperature of 100°C to 160°C. When the cylinder temperature is higher than 350°C, the resin composition is decomposed and colored. On the other hand, when the cylinder temperature is lower than 260°C, the melt viscosity becomes high, and it easily becomes difficult to mold the optical lens. Moreover, when the mold temperature is higher than 170°C, it easily becomes difficult to remove a molded piece consisting of the resin composition from a mold. On the other hand, when the mold temperature is lower than 90°C, the resin is hardened too quickly in a mold upon the molding thereof, and it becomes difficult to control the shape of a molded piece, or it easily becomes difficult to sufficiently transcribe a vehicle placed in a mold.

As mentioned before, according to the present invention, the resin composition is used in an optical lens. Since the optical lens of the present invention is produced using the resin composition, it has a high refractive index, is excellent in terms of heat resistance and can be used in fields in which expensive glass lenses having a high refractive index have been conventionally used, such as telescopes, binoculars and TV projectors, and thus, the optical lens produced using the present resin composition is extremely useful.

For instance, regarding a lens used for smart phones, a lens molded from a thermoplastic resin comprising the constituent unit (A) is overlapped with a lens molded from a resin comprising the constituent unit represented by any one of the formulae (II-1) to (II-4) or a resin comprising a constituent unit derived from a monomer represented by any one of the following formulae, so that the lenses can be used as a lens unit: 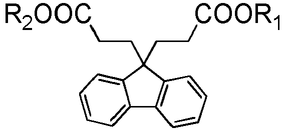 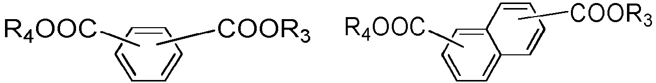 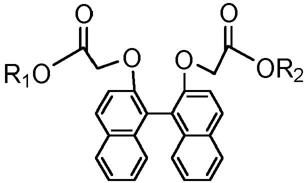 wherein R₁ and R₂ each independently represent a hydrogen atom, a methyl group or an ethyl group, and R₃ and R₄ each independently represent a hydrogen atom, a methyl group, an ethyl group or alkylene glycol containing 2 to 5 carbon atoms.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the central portion is preferably 0.05 to 3.0 mm, more preferably 0.05 to 2.0 mm, and further preferably 0.1 to 2.0 mm. In addition, the diameter is preferably 1.0 mm to 20.0 mm, more preferably 1.0 to 10.0 mm, and further preferably, 3.0 to 10.0 mm. Further, regarding the shape thereof, the optical lens of the present invention is preferably a meniscus lens, in which one surface is a convex, and the other surface is a concave.

The optical lens of the present invention is molded according to any given method such as die molding, cutting, polishing, laser machining, electrical discharge machining, or etching. Among these methods, die molding is more preferable in terms of production costs.

In order to avoid the mixing of foreign matters into the optical lens, the molding environment must be naturally a low-dust environment, and the class is preferably 6 or less, and more preferably 5 or less.

### EXAMPLES

Hereinafter, the present invention will be described in detail by way of working examples and comparative examples, but the present invention is not limited to the working examples. Values of physical properties of resins obtained were measured based on the below-described methods and apparatuses.

### 1) NMR Analysis

Measurement apparatus: Fourier Transform Nuclear Magnetic Resonance AVANCE III HD 400 (manufactured by BRUKER)

A measurement sample was dissolved in deuterated chloroform (CDCl₃), and ¹³C-NMR and ¹H-NMR spectra were measured.

### 2) Refractive Index

Measurement apparatus: Refractometer (RA-500 manufactured by Kyoto Electronics Manufacturing Co., Ltd.)

Tetrahydrofuran solutions of a measurement sample (concentrations: 30%, 20%, 10%) were prepared, and the refractive indexes thereof were measured by the refractometer. The relationship between the concentration and the refractive index was drawn from the obtained results, the value in the case of the concentration of 100% was calculated according to the extrapolation method, and the value was taken as the refractive index of the measurement sample.

### 3) Thermal Analysis

3 mg of a crystal obtained in a synthesis example was weighed in an aluminum pan, and using a differential scanning calorimeter (DSC7020 manufactured by Hitachi High-Tech Science Corporation), thermal analysis of the crystal was carried out under the below-described operating conditions, wherein aluminum oxide was used as a control.

### (Operating Conditions)

Temperature raising rate: 10°C/min
Measurement temperature range: 30 to 400°C
Measurement atmosphere: open, nitrogen (50 mL/min)

### 4) Powder X-ray Diffractometry (PXRD)

The sample filling portion of a glass test plate was filled with 0.1 g of a compound obtained in a synthesis example, and the measurement was carried out under the below-described conditions using the below-described apparatus.

### [Measurement apparatus]

MiniFlex600-C/manufactured by Rigaku Corporation

### [Measurement conditions]

X-ray source: CuKα
Tube voltage: 40 kV
Tube current: 15 mA
Scan axis: 2θ/θ
Mode: continuous
Measurement range: 2θ=5° to 90°
Step: 0.02°
Speed measurement time: 10°/min
Entrance slit: 0.25°
Receiving slit: 13.00 mm

### 5) Weight-Average Molecular Weight (Mw)

The weight-average molecular weight of a resin obtained was measured according to the gel permeation chromatography (GPC) method and calculated based on standard polystyrene conversion. The apparatuses and columns used and measurement conditions are as described below.
GPC apparatus: HLC-8420GPC manufactured by Tosoh Corporation
Columns:
   TSKgel SuperHM-M × 3, manufactured by Tosoh Corporation
   TSKgel guardcolumn SuperH-H × 1, manufactured by Tosoh Corporation
   TSKgel SuperH-RC × 1, manufactured by Tosoh Corporation
Detector: RI detector
Standard polystyrene: standard polystyrene kit PStQuick C manufactured by Tosoh Corporation
Sample solution: 0.2% by mass solution of tetrahydrofuran
Eluent: tetrahydrofuran
Flow rate of eluent: 0.6 mL/min
Column temperature: 40°C

### 6) Glass Transition Temperature (Tg)

Based on JIS K7121-1987, the measurement was carried out with a temperature raising program of 10°C/min using a differential scanning calorimeter.
Differential scanning calorimeter: DSC2500 manufactured by TA Instruments

### 7) Refractive Index (nD)

Based on JIS B 7071-2:2018, a V-block was obtained by molding a polycarbonate resin and used as a test piece. The refractive index was measured at 23°C using a refractometer (KPR-3000 manufactured by Shimadzu Corporation).

### 8) Abbe Number (v)

Using the same test piece (V-block) as that used for the measurement of the refractive index, refractive indexes at wavelengths of 486 nm, 589 nm and 656 nm were measured at 23°C using a refractometer, and the Abbe number was calculated using the below-described formula.

Refractometer: KPR-3000 manufactured by Shimadzu Corporation$v = \left(nD-1\right) / \left(nF-nC\right)$
nD: refractive index at a wavelength of 589 nm
nC: refractive index at a wavelength of 656 nm
nF: refractive index at a wavelength of 486 nm

### 9) Photoelastic Coefficient

A resin obtained was dissolved in dichloromethane to obtain a resin solution. This resin solution was spread in a vat, the solvent was evaporated, and thus a film having a thickness of 0.1 mm was obtained and used as a sample piece.

The photoelastic coefficient was measured using an ellipsometer.

Measurement method: The photoelastic coefficient was calculated by measuring the change in birefringence relative to change in load at a wavelength of 633 nm.

Ellipsometer: Ellipsometer M-220 manufactured by JASCO Corporation

### [Synthesis Example 1]

### Production of 1,3-bis[1-methyl-1-(4-hydroxy-3-phenylphenyl)ethyl]benzene

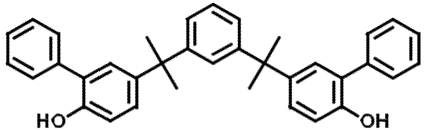

157.7 g (0.93 mol) of 2-phenylphenol and 21.0 g of methanol were put in a 1000 mL four-neck flask equipped with a reflux device, complete substitution with nitrogen gas was performed in the flask, and then complete substitution with hydrochloric acid gas was performed in the flask at an internal temperature of 35°C.

Meanwhile, 30.0 g (0.15 mol) of α,α,α',α'-tetramethyl-1,3-benzenedimethanol, 53.0 g (0.31 mol) of 2-phenylphenol, and 37.5 g of methanol were put in another glass container, and it was heated to 65°C to prepare a solution A.

While maintaining the internal temperature of the four-neck flask at 30°C, hydrochloric acid gas was injected into the flask, and the above-described solution A was added dropwise thereto over 2 hours using a dropping funnel. After the dropwise addition was completed, the internal temperature was lowered to 25°C, and stirring was continued overnight.

After the reaction was completed, the reaction solution was neutralized with an aqueous solution of sodium hydroxide, and the separated aqueous layer was removed. 192.5 g of toluene and 45.0 g of water were added and stirring was performed at an internal temperature of 65°C for 30 minutes, and then the mixture was allowed to stand, and the separated aqueous layer was removed. After that, the obtained oil layer was washed with water twice at an internal temperature of 75°C to remove sodium chloride produced by neutralization.

After that, toluene and 2-phenylphenol in the flask were distilled off under heating and reduced pressure conditions (final flask internal temperature: 270°C, internal pressure: 0.6 kPa). After that, the residue in the flask was taken out. The solid obtained by cooling was colorless and transparent.

According to the above-described NMR analysis, it was confirmed that the obtained solid was the objective substance.

¹H-NMR (400 MHz, solvent: CDCl₃) δ<ppm>: 1.75 (s, 6H), 5.32 (s, 1H), 7.10-7.55 (m, 9H)

¹³C-NMR (400 MHz, solvent: CDCl₃) δ<ppm>: 31.09, 42.60, 115.43, 123.97, 127.39, 127.69, 127.75, 127.85, 128.48, 129.23, 129.26, 137.73, 148.29, 150.19, 150.37

The yield of the obtained solid as the objective substance relative to α,α,α',α'-tetramethyl-1,3-benzenedimethanol as the raw material was 89 mol%.

The purity measured by high-performance liquid chromatography was 91.9%.

### [Synthesis Example 2]

### Production of 1,3-bis[1-methyl-1-(4-(2-hydroxyethoxy)-3-phenylphenyl)ethyl]benzene

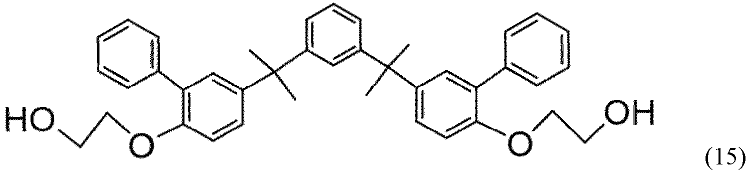

52.6 g (0.31 mol) of 3-phenylphenol and 11.8 g of methanol were put in a 500 mL four-neck flask equipped with a reflux device, complete substitution with nitrogen gas was performed in the flask, and then complete substitution with hydrochloric acid gas was performed in the flask at an internal temperature of 35°C.

Meanwhile, 15.0 g (0.08 mol) of α,α,α',α'-tetramethyl-1,3-benzenedimethanol, 26.0 g (0.15 mol) of 3-phenylphenol, and 18.8 g of methanol were put in another glass container, and it was heated to 65°C to prepare a solution A.

While maintaining the internal temperature of the four-neck flask at 30°C, hydrochloric acid gas was injected into the flask, and the above-described solution A was added dropwise thereto over 1.5 hours using a dropping funnel. After the dropwise addition was completed, the internal temperature was lowered to 25°C, and stirring was continued overnight.

After the reaction was completed, substitution with nitrogen gas was performed in the flask, and then the reaction solution was neutralized with an aqueous solution of sodium hydroxide, and the separated aqueous layer was removed. 96.2 g of toluene and 22.5 g of water were added and stirring was performed at an internal temperature of 65°C for 30 minutes, and then the mixture was allowed to stand, and the separated aqueous layer was removed. After that, the obtained oil layer was washed with water twice at an internal temperature of 75°C to remove sodium chloride produced by neutralization. After that, toluene and 3-phenylphenol in the flask were distilled off under heating and reduced pressure conditions (final flask internal temperature: 220°C, internal pressure: 0.5 kPa). It was confirmed that 1,3-bis[1-methyl-1-(4-hydroxy-3-phenylphenyl)ethyl]benzene (hereinafter referred to as "Compound A") synthesized in Synthesis Example 1 was contained in 36.9 g of the obtained distillation residue. The crude yield of Compound A relative to α,α,α',α'-tetramethyl-1,3-benzenedimethanol was 94 mol%.

After that, 15.3 g (0.17 mol) of ethylene carbonate, 1.6 g (0.03 mol) of potassium hydroxide, 1.2 g (0.004 mol) of tetrabutylammonium bromide, and 110.7 g of methyl isobutyl ketone were added to the flask, substitution with nitrogen was performed in the flask, and then the temperature of the solution in the flask was raised to 115°C, and stirring was performed for 5 hours while maintaining the temperature at 115°C to 116°C.

After the reaction, the temperature of the solution in the flask was lowered to 85°C, and 22.9 g of pure water was added to the reaction solution to hydrolyze the remaining ethylene carbonate. After that, 8.8 g of water containing hydrochloric acid (12%) was added thereto to neutralize the mixture, and then the aqueous layer was separated. After pure water was added to the obtained oil layer and stirring was performed, the operation of washing with water for separating the aqueous layer was performed five times to remove potassium chloride produced by neutralization.

After that, 73.6 g of cyclohexane was added and the solution in the flask was cooled to 25°C, and then a crystal was precipitated. The precipitated crystal was separated by filtration to obtain 44.6 g of a crystal containing the solvent. According to NMR analysis, it was confirmed that the obtained crystal was 1,3-bis[1-methyl-1-(4-(2-hydroxyethoxy)-3-phenylphenyl)ethyl]benzene as the objective substance (hereinafter referred to as "Compound B"). The yield of Compound B relative to the amount of Compound A used was 77 mol%.

Subsequently, 44.3 g of the obtained crystal of Compound B (34.0 g as Compound B) and 132.9 g of methyl isobutyl ketone were put in a 500 ml four-neck flask equipped with a reflux device, the temperature of the solution in the flask was raised to 75°C, and stirring was carried out to completely dissolve the solid. After that, 88.6 g of cyclohexane was added and the solution in the flask was cooled to 25°C, and then a crystal was precipitated. The precipitated crystal was separated by filtration and dried by heating under reduced pressure to obtain a white crystal of Compound B.

¹H-NMR (400 MHz, solvent: CDCl₃) δ<ppm>: 1.75 (s, 6H), 2.22 (t, 1H), 3.80-3.83 (q, 2H), 4.03-4.05 (t, 2H), 6.87-6.89 (d, 1H), 7.12-7.55 (m, 10H)

¹³C-NMR (400 MHz, solvent: CDCl₃) δ<ppm>: 30.99, 42.59, 61.41, 70.32, 112.94, 123.78, 126.22, 126.97, 127.19, 127.63, 128.12, 129.31, 129.56, 1, 30.47, 138.88, 143.94, 150.30, 153.25

The purity measured by high-performance liquid chromatography was 98.8%.

The obtained compound was used as a measurement sample, and the refractive index thereof measured by the above-described analysis method was 1.611.

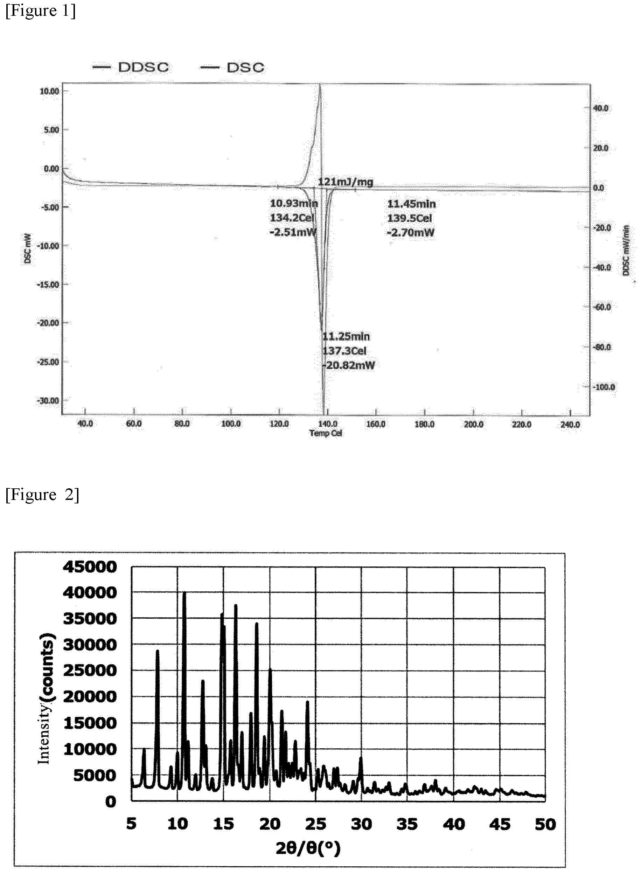

The obtained crystal of the compound was subjected to differential scanning calorimetry, and the endothermic peak top temperature was 137.3°C. The data of differential scanning calorimetry (DSC) are shown in Figure 1.

The diffraction angles 2θ (°) of diffraction peaks that appeared when the obtained crystal of the compound was subj ected to powder X-ray diffraction (PXRD) measurement, and peaks having a relative integrated intensity of 30 or more when based on the peak having the highest integrated intensity are shown in Table 1. The chart of PXRD measurement is shown in Figure 2.

**[Table 1]**

| 2θ/θ (°) | Relative integrated intensity | 2θ/θ (°) | Relative integrated intensity |
|---|---|---|---|
| 7.88 | 73 | 17.01 | 34 |
| 10.79 | 93 | 18.00 | 33 |
| 12.79 | 60 | 18.62 | 71 |
| 14.86 | 100 | 20.19 | 63 |
| 15.07 | 57 | 21.33 | 31 |
| 16.33 | 90 | 24.14 | 42 |

### (Example 1)

As raw materials, 16.694 g (0.0381 mol) of 9,9-bis[4-(2-hydroxyethoxy)phenyl]fluorene (BPEF), 8.1361 g (0.0163 mol) of 4-(1-{3-[1-(4-hydroxy-3-phenylphenyl)-isopropyl]phenyl}-isopropyl)-2-phenylphenol (also known as 1,3-bis[1-methyl-1-(4-hydroxy-3-phenylphenyl)ethyl]benzene, abbreviated as BisOPP-M) obtained in Synthesis Example 1, 12.000 g (0.0560 mol) of diphenyl carbonate (DPC), and 20 µl of 2.5×10⁻² mol/l sodium hydrogen carbonate solution (5.0×10⁻⁷ mol, that is, 9.2×10⁻⁶ mol relative to 1 mol of the total of dihydroxy compounds) were put in a 300 mL reactor equipped with a stirrer and a distillation apparatus, and the inside of the system was set to be under nitrogen flow conditions. The reactor was immersed in an oil bath heated to 200°C to start a transesterification reaction. Over 140 minutes, the temperature was raised to 240°C while the pressure was reduced to 0 kPa, and after maintaining the conditions for 30 minutes, nitrogen gas was introduced into the reaction system and the pressure was recovered to 101.3 kPa, thereby obtaining a polycarbonate resin. Physical properties of the obtained resin are shown below in Table 2.

### (Example 2)

A polycarbonate resin was obtained in a manner similar to that in Example 1, except that the feed amounts of raw materials were as shown below in Table 3. Physical properties of the obtained resin are shown in Table 2.

### (Comparative Example 1)

A polycarbonate resin was obtained in a manner similar to that in Example 1, except that 5.6527 g (0.0163 mol) of 1,3-bis(1-methyl-1-phenylethyl)benzene (abbreviated as BPM) was used instead of 8.1361 g (0.0163 mol) of 1,3-bis[1-methyl-1-(4-hydroxy-3-phenylphenyl)ethyl]benzene (abbreviated as BisOPP-M) obtained in Synthesis Example 1. Physical properties of the obtained resin are shown in Table 2.

**[Table 2]**

| | | | | Physical properties | | | | |
|---|---|---|---|---|---|---|---|---|
| | BisOPP-M | BPM | BPEF | nd | vd | Tg | Mw | Photoelastic coefficient |
| | 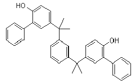 | 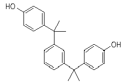 | 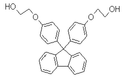 | | | | | |
| [Unit] | [mol%] | [mol%] | [mol%] | [-] | [-] | [°C] | [-] | [-] |
| Example 1 | 30 | 0 | 70 | 1.632 | 24.26 | 130 | 35000 | 37.3 |
| Example 2 | 15 | 0 | 85 | 1.635 | 23.88 | 136 | 28500 | 35.5 |
| Comparative Example 1 | 0 | 30 | 70 | 1.626 | 24.87 | 134 | 39900 | 38.5 |

**[Table 3]**

| | Feed amounts of raw materials | | | | | | | | |
|---|---|---|---|---|---|---|---|---|---|
| | BisOPP-M | BPM | BPEF | DPC | BisOPP-M | BPM | BPEF | DPC | DPC/diol |
| | 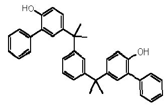 | 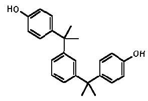 | 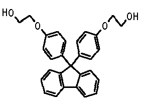 | | 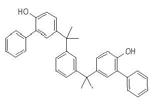 | 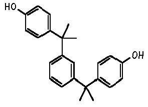 | 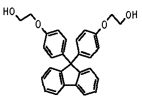 | | |
| [Unit] | [g] | [g] | [g] | [g] | [mol] | [mol] | [mol] | [mol] | [mol/mol] |
| Example 1 | 8.1361 | 0 | 16.6940 | 12.0000 | 0.0163 | 0 | 0.0381 | 0.0560 | 1.0300 |
| Example 2 | 4.0681 | 0 | 20.2713 | 12.0000 | 0.0082 | 0 | 0.0462 | 0.0560 | 1.0300 |
| Comparative Example 1 | 0 | *5.6527* | *16.6940* | *12.0000* | *0* | *0.0163* | *0.0381* | *0.0560* | *1.0300* |

### (Examples 3 to 4, Comparative Example 2)

A polycarbonate resin was obtained in a manner similar to that in Exmaple 1, except that the feed amounts of raw materials were as shown further below in Table 5. Physical properties of the obtained resin are shown in Table 4.

**[Table 4]**

| | | | | | Physical properties | | | | |
|---|---|---|---|---|---|---|---|---|---|
| | | BPM | BPEF | NOLE | nd | vd | Tg | Mw | Photoelastic coefficient |
| | 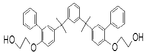 | 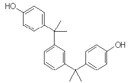 | 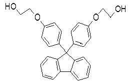 | 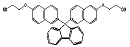 | | | | | |
| [Unit] | [mol%] | [mol%] | [mol%] | [mol%] | [-] | [-] | [°C] | [-] | [-] |
| Example 3 | 50 | 0 | 50 | 0 | 1.626 | 24.76 | 101 | 45500 | 30.1 |
| Example 4 | 50 | 0 | 0 | 50 | 1.649 | 21.71 | 113 | 41900 | 38.0 |
| Comparative Example 2 | 0 | 50 | 50 | 0 | 1.615 | 26.00 | 130 | 36100 | 40 |

**[Table 5]**

| | Feed amounts of raw materials | | | | |
|---|---|---|---|---|---|
| | | BPM | BPEF | NOLE | DPC |
| | 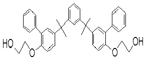 | 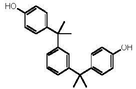 | 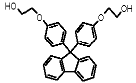 | 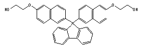 | |
| [Unit] | [g] | [g] | [g] | [g] | [g] |
| Example 3 | 24.0318 | 0 | 17.9737 | 0 | 18.0000 |
| Example 4 | 18.6914 | 0 | 0 | 17.1717 | 14.0000 |
| Comparative Example 2 | 0 | 14.2216 | 18.0000 | 0 | 18.1138 |

| | Feed amounts of raw materials | | | | | |
|---|---|---|---|---|---|---|
| | 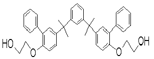 | BPM | BPEF | NOLE | DPC | DPC/diol |
| | | 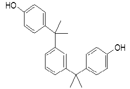 | 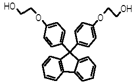 | 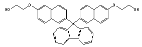 | | |
| [Unit] | [mol] | [mol] | [mol] | [mol] | [mol] | [mol/mol] |
| Example 3 | 0.041 | 0 | 0.0410 | 0 | 0.0840 | 1.0250 |
| Example 4 | 0.0319 | 0 | 0 | 0.0319 | 0.0654 | 1.0250 |
| Comparative Example 2 | 0 | 0.041 | 0.0410 | 0 | 0.0846 | 1.0300 |

### (Example 5)

### (Process 1)

36.1 g of BisOPP-M obtained in Synthesis Example 1 and 63.9 g of 9,9-bis(4-hydroxy-3-methylphenyl)fluorene (abbreviated as BCFL) (i.e., BisOPP-M:BCFL=30:70 (mol%)) were put in 500 ml of 9% (w/w) aqueous solution of sodium hydroxide, and 0.5 g of hydrosulfite was further added thereto and dissolved. To this solution, 300 ml of dichloromethane and 0.1 g of triethylbenzylammonium chloride (TEBAC: manufactured by FUJIFILM Wako Pure Chemical Corporation) were added, and while stirring, the temperature of the solution was set at 20°C, and 47.8 g of phosgene was injected over 30 minutes.

### (Process 2)

After the injection of phosgene was completed, 1.45 g of p-tert-butylphenol (PTBP) dissolved in 50 ml of dichloromethane was added, and the mixture was vigorously stirred for 7 minutes to perform emulsification, and then 0.5 ml of triethylamine as a polymerization catalyst was added to perform polymerization for 30 minutes.

### (Post-process)

The polymerization solution was separated into an aqueous layer and an organic layer, the organic layer was neutralized with phosphoric acid, and washing with pure water was repeated until the pH of wash liquid became 7.0. From this purified polycarbonate resin, the organic solvent was distilled off to obtain a polycarbonate resin powder. The polycarbonate resin powder was dried at 120°C for 24 hours to completely distill off the solvent. Physical properties of the obtained resin are shown in Table 6.

### (Comparative Example 3)

A polycarbonate resin was obtained in a manner similar to that in Example 5, except that BisOPP-M was changed to BPM; 28.2 g of BPM and 71.8 g of BCFL (i.e., BPM:BCFL=30:70 (mol%)) were used; 37.6 g of phosgene was used; and 2.04 g of PTBT was used. Physical properties of the obtained resin are shown in Table 6.

**[Table 6]**

| | | | | Physical properties | | | |
|---|---|---|---|---|---|---|---|
| | BisOPP-M | BPM | BCFL | nd | vd | Tg | Mw |
| | 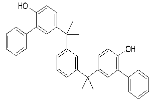 | 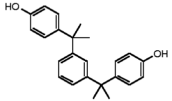 | 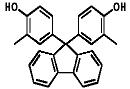 | | | | |
| [Unit] | [mol%] | [mol%] | [mol%] | [-] | [-] | [°C] | [-] |
| Example 5 | 30 | 0 | 70 | 1.629 | 22.98 | 174 | 31000 |
| Comparative Example 3 | 0 | 30 | 70 | 1.620 | 24.47 | 185 | 40600 |

## Claims

1. An optical lens comprising a thermoplastic resin comprising a structural unit (A) derived from a monomer represented by general formula (1): 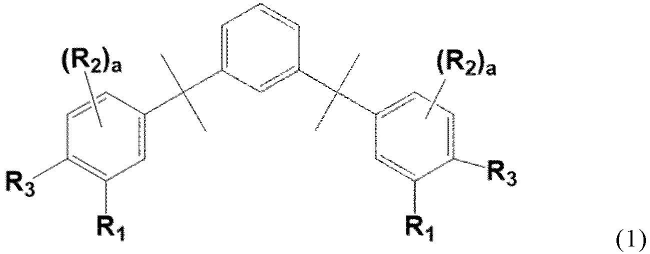 wherein in the formula: each R₁ independently represents an aryl group having 6 to 14 carbon atoms or an aralkyl group having 7 to 17 carbon atoms; each R₂ independently represents a hydrogen atom, an aryl group having 6 to 14 carbon atoms, or an aralkyl group having 7 to 17 carbon atoms; each a independently represents an integer of 0 or 1 to 3; each R₃ independently represents -OH or - O-(CH₂)ₙ-OH; and n represents an integer of 1 to 4.

2. The optical lens according to claim 1, wherein the monomer represented by general formula (1) is a monomer represented by formula (1A): 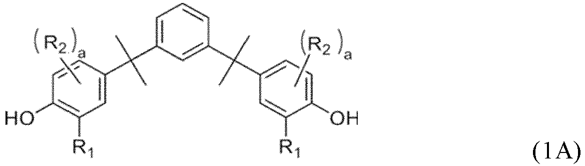 wherein in the formula, R₁, R₂ and a are the same as those in general formula (1).

3. The optical lens according to claim 1, wherein the monomer represented by general formula (1) is a monomer represented by formula (5):

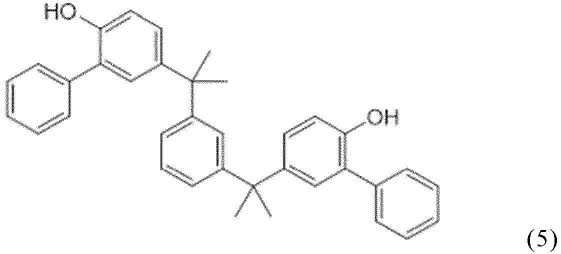

4. The optical lens according to claim 1, wherein the monomer represented by general formula (1) is a monomer represented by formula (1B): 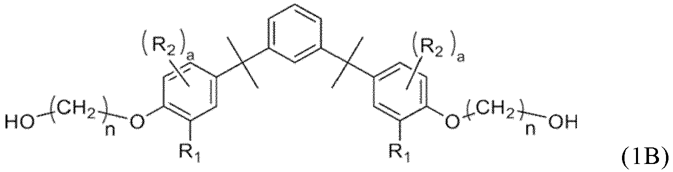 wherein in the formula: R₁, R₂ and a are the same as those in general formula (1); and each n independently represents an integer of 1 to 4.

5. The optical lens according to claim 1, wherein the monomer represented by general formula (1) is a monomer represented by formula (15):

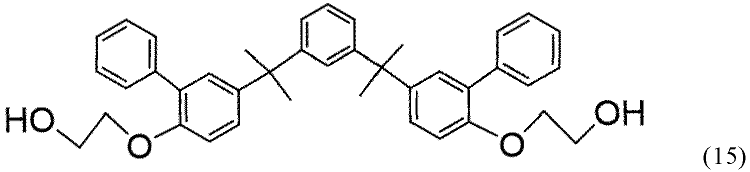

6. The optical lens according to any one of claims 1 to 5, which is a polycarbonate resin, a polyester carbonate resin, or a polyester resin.

7. The optical lens according to any one of claims 1 to 6, which comprises a structural unit (B) derived from a monomer represented by general formula (6) and/or a structural unit (C) derived from a monomer represented by general formula (7): 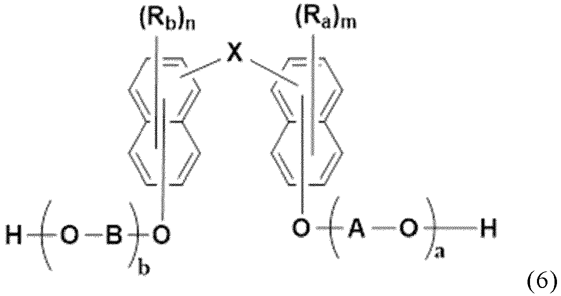 wherein in general formula (6):
Rₐ and R_{b} are each independently selected from the group consisting of a hydrogen atom; a halogen atom; an alkyl group having 1 to 20 carbon atoms and optionally having a substituent; an alkoxyl group having 1 to 20 carbon atoms and optionally having a substituent; a cycloalkyl group having 5 to 20 carbon atoms and optionally having a substituent; a cycloalkoxyl group having 5 to 20 carbon atoms and optionally having a substituent; an aryl group having 6 to 20 carbon atoms and optionally having a substituent; a heteroaryl group having 6 to 20 carbon atoms and optionally having a substituent, which contains at least one heterocyclic atom selected from O, N and S; an aryloxy group having 6 to 20 carbon atoms and optionally having a substituent; and -C≡C-Rₕ;
Rₕ represents an aryl group having 6 to 20 carbon atoms and optionally having a substituent, or a heteroaryl group having 6 to 20 carbon atoms and optionally having a substituent, which contains at least one heterocyclic atom selected from O, N and S;
X represents a single bond or a fluorene group optionally having a substituent;
A and B each independently represent an alkylene group having 1 to 5 carbon atoms and optionally having a substituent;
m and n each independently represent an integer of 0 to 6; and
a and b each independently represent an integer of 0 to 10, 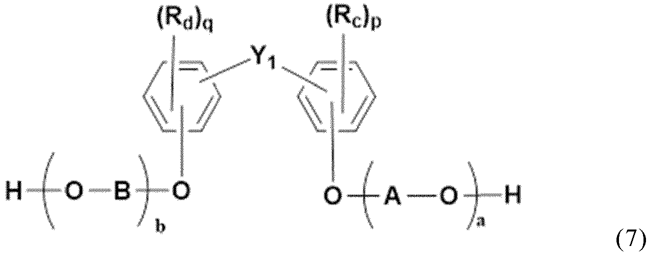
wherein in general formula (7):
R_{c} and R_{d} are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, and an aryl group having 6 to 20 carbon atoms and optionally having a substituent;
Y₁ represents a single bond, a fluorene group optionally having a substituent, or any one of structural formulae represented by formulae (8) to (14): 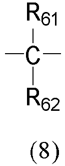
-S- (9) 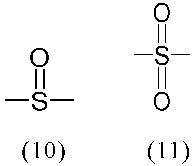
-(CH₂)ᵣ- (12)
-O- (13) 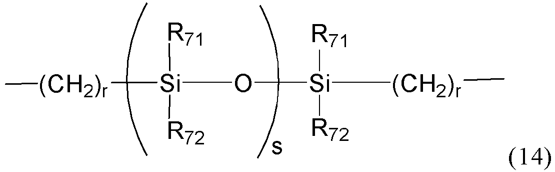
wherein in formulae (8) to (14):
R₆₁, R₆₂, R₇₁ and R₇₂ each independently represent a hydrogen atom, a halogen atom, an alkyl group having 1 to 20 carbon atoms and optionally having a substituent, or an aryl group having 6 to 30 carbon atoms and optionally having a substituent, or represent a carbocyclic ring or heterocyclic ring having 1 to 20 carbon atoms and optionally having a substituent, wherein R₆₁ and R₆₂, or R₇₁ and R₇₂, are bonded to each other, and
r and s each independently represent an integer of 0 to 5000;
A and B each independently represent an alkylene group having 1 to 5 carbon atoms and optionally having a substituent;
p and q each independently represent an integer of 0 to 4; and
a and b each independently represent an integer of 0 to 10.

8. The optical lens according to claim 7, wherein in general formula (6) and general formula (7), A and B each independently represent an alkylene group having 2 or 3 carbon atoms.

9. The optical lens according to claim 7 or 8, which comprises at least a structural unit derived from any one of BPEF, BNE, BNEF and DPBHBNA.

10. The optical lens according to any one of claims 1 to 9, which further comprises a structural unit derived from at least one monomer selected from the group of monomers below: 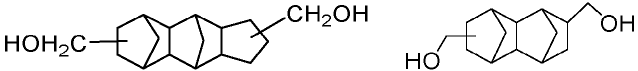 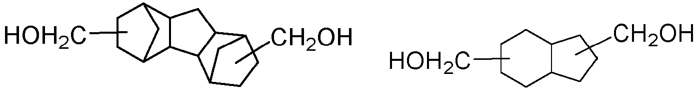 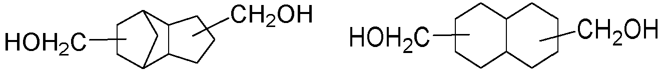 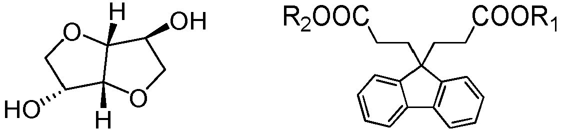 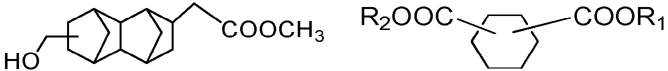 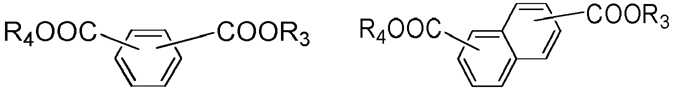 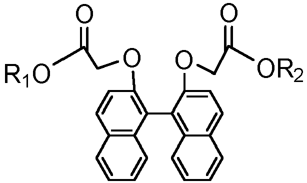 wherein in the formulae: R₁ and R₂ each independently represent a hydrogen atom, a methyl group or an ethyl group; and R₃ and R₄ each independently represent a hydrogen atom, a methyl group, an ethyl group or an alkylene glycol having 2 to 5 carbon atoms.

11. The optical lens according to any one of claims 1 to 10, wherein a polystyrene-equivalent weight-average molecular weight (Mw) of the thermoplastic resin is 10,000 to 100,000 and wherein the polystyrene-equivalent weight-average molecular weight (Mw) is measured as described in the description .

12. The optical lens according to any one of claims 1 to 11, wherein a refractive index (nD) of the thermoplastic resin is 1.600 to 1.700 and wherein the refractive index (nD) is measured as described in the description.

13. The optical lens according to any one of claims 1 to 12, wherein an Abbe number (v) of the thermoplastic resin is 22.0 to 26.0 and wherein the Abbe number (v) is measured as described in the description.

14. The optical lens according to any one of claims 1 to 13, wherein a glass transition temperature of the thermoplastic resin is 70 to 200°C and wherein the glass transition temperature is measured based on JIS K7121-1987 with a temperature raising program of 10°C/min using a differential scanning calorimeter.

15. The optical lens according to any one of claims 1 to 14, wherein a photoelastic coefficient of the thermoplastic resin is 25 to 45 and wherein the photoelastic coefficient is measured as described in the description.

## Patentansprüche

1. Optische Linse, umfassend ein thermoplastisches Harz, das eine Struktureinheit (A) umfasst, die von einem Monomer mit der allgemeinen Formel (1) abgeleitet ist: 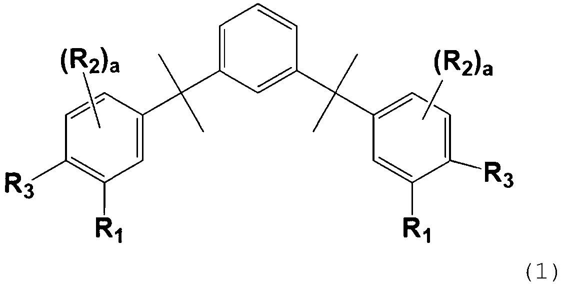 worin, in der Formel: jedes R₁ unabhängig eine Arylgruppe mit 6 bis 14 Kohlenstoffatomen oder eine Aralkylgruppe mit 7 bis 17 Kohlenstoffatomen darstellt; jedes R₂ unabhängig ein Wasserstoffatom, eine Arylgruppe mit 6 bis 14 Kohlenstoffatomen oder eine Aralkylgruppe mit 7 bis 17 Kohlenstoffatomen darstellt; jedes a unabhängig eine ganze Zahl von 0 oder 1 bis 3 darstellt; jedes R₃ unabhängig -OH oder -O-(CH₂)ₙ-OH darstellt; und n eine ganze Zahl von 1 bis 4 darstellt.

2. Optische Linse gemäß Anspruch 1, wobei das Monomer mit der allgemeinen Formel (1) ein Monomer mit der Formel (1A) ist: 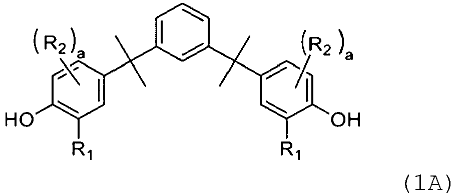 worin, in der Formel, R₁, R₂ und a die gleiche Bedeutung haben wie in der allgemeinen Formel (1).

3. Optische Linse gemäß Anspruch 1, wobei das Monomer mit der allgemeinen Formel (1) ein Monomer mit der Formel (5) ist:

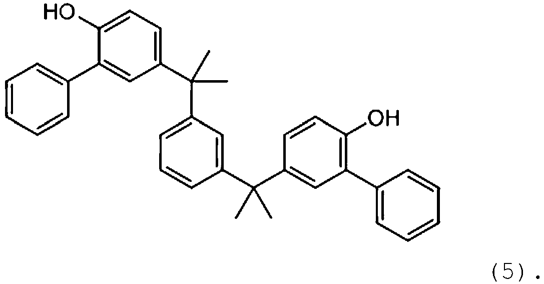

4. Optische Linse gemäß Anspruch 1, wobei das Monomer mit der allgemeinen Formel (1) ein Monomer mit der Formel (1B) ist: 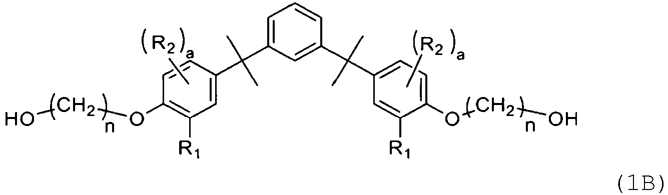 worin, in der Formel: R₁, R₂ und a die gleiche Bedeutung wie in der allgemeinen Formel (1) haben; und jedes n unabhängig eine ganze Zahl von 1 bis 4 darstellt.

5. Optische Linse gemäß Anspruch 1, wobei das Monomer mit der allgemeinen Formel (1) ein Monomer mit der Formel (15) ist:

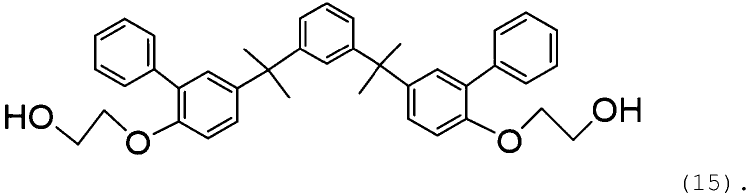

6. Optische Linse gemäß mindestens einem der Ansprüche 1 bis 5, die ein Polycarbonatharz, ein Polyestercarbonatharz oder ein Polyesterharz ist.

7. Optische Linse gemäß mindestens einem der Ansprüche 1 bis 6, die eine Struktureinheit (B), die von einem Monomer mit der allgemeinen Formel (6) abgeleitet ist, und/oder eine Struktureinheit (C), die von einem Monomer mit der allgemeinen Formel (7) abgeleitet ist, umfasst: 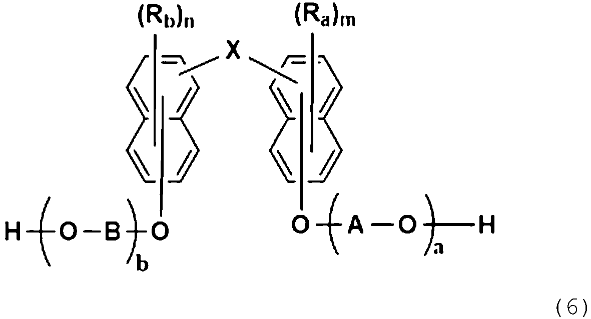
worin, in der allgemeinen Formel (6):
Rₐ und R_{b} jeweils unabhängig ausgewählt sind aus der Gruppe bestehend aus einem Wasserstoffatom; einem Halogenatom; einer Alkylgruppe mit 1 bis 20 Kohlenstoffatomen, die optional einen Substituenten aufweist; einer Alkoxylgruppe mit 1 bis 20 Kohlenstoffatomen, die optional einen Substituenten aufweist; einer Cycloalkylgruppe mit 5 bis 20 Kohlenstoffatomen, die optional einen Substituenten aufweist; einer Cycloalkoxylgruppe mit 5 bis 20 Kohlenstoffatomen, die optional einen Substituenten aufweist; einer Arylgruppe mit 6 bis 20 Kohlenstoffatomen, die optional einen Substituenten aufweist; einer Heteroarylgruppe mit 6 bis 20 Kohlenstoffatomen, die optional einen Substituenten aufweist und mindestens ein heterocyclisches Atom enthält, ausgewählt aus O, N und S; einer Aryloxygruppe mit 6 bis 20 Kohlenstoffatomen, die optional einen Substituenten aufweist; und -C≡C-Rₙ;
Rₕ ist eine Arylgruppe mit 6 bis 20 Kohlenstoffatomen, die optional einen Substituenten aufweist, oder eine Heteroarylgruppe mit 6 bis 20 Kohlenstoffatomen, die optional einen Substituenten aufweist und mindestens ein heterocyclisches Atom enthält, ausgewählt aus O, N und S;
X ist eine Einfachbindung oder eine Fluorengruppe, die optional einen Substituenten aufweist;
A und B sind jeweils unabhängig eine Alkylengruppe mit 1 bis 5 Kohlenstoffatomen, die optional einen Substituenten aufweist;
m und n sind jeweils unabhängig eine ganze Zahl von 0 bis 6; und
a und b sind jeweils unabhängig eine ganze Zahl von 0 bis 10, 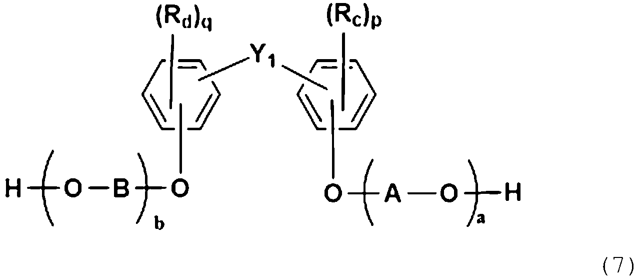
worin, in der allgemeinen Formel (7):
R_{c} und R_{d} jeweils unabhängig ausgewählt sind aus der Gruppe bestehend aus einem Wasserstoffatom, einem Halogenatom, einer Alkylgruppe mit 1 bis 20 Kohlenstoffatomen, die optional einen Substituenten aufweist, einer Alkoxylgruppe mit 1 bis 20 Kohlenstoffatomen, die optional einen Substituenten aufweist, einer Cycloalkylgruppe mit 5 bis 20 Kohlenstoffatomen, die optional einen Substituenten aufweist, einer Cycloalkoxylgruppe mit 5 bis 20 Kohlenstoffatomen, die optional einen Substituenten aufweist, und einer Arylgruppe mit 6 bis 20 Kohlenstoffatomen, die optional einen Substituenten aufweist;
Y₁ ist eine Einfachbindung, eine Fluorengruppe, die optional einen Substituenten aufweist, oder eine der durch die Formeln (8) bis (14) dargestellten Strukturformeln: 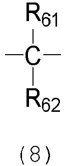
-S- (9) 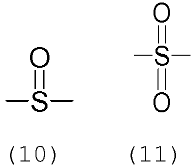
-(CH₂)ᵣ- (12)
-O- (13) 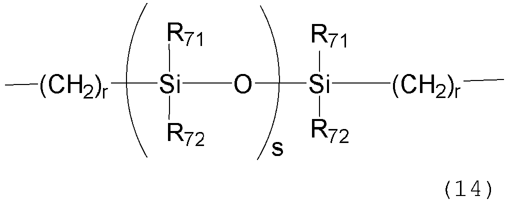
worin, in den Formeln (8) bis (14):
R₆₁, R₆₂, R₇₁ und R₇₂ jeweils unabhängig für ein Wasserstoffatom, ein Halogenatom, eine Alkylgruppe mit 1 bis 20 Kohlenstoffatomen, die optional einen Substituenten aufweist, oder eine Arylgruppe mit 6 bis 30 Kohlenstoffatomen, die optional einen Substituenten aufweist, oder einen carbocyclischen Ring oder heterocyclischen Ring mit 1 bis 20 Kohlenstoffatomen, der optional einen Substituenten aufweist, stehen, wobei R₆₁ und R₆₂ oder R₇₁ und R₇₂ miteinander verbunden sind, und
r und s stehen jeweils unabhängig für eine ganze Zahl von 0 bis 5000;
A und B stehen jeweils unabhängig für eine Alkylengruppe mit 1 bis 5 Kohlenstoffatomen, die optional einen Substituenten aufweist;
p und q stehen jeweils unabhängig für eine ganze Zahl von 0 bis 4; und
a und b stehen jeweils unabhängig für eine ganze Zahl von 0 bis 10.

8. Optische Linse gemäß Anspruch 7, wobei in der allgemeinen Formel (6) und der allgemeinen Formel (7) A und B jeweils unabhängig für eine Alkylengruppe mit 2 oder 3 Kohlenstoffatomen stehen.

9. Optische Linse gemäß Anspruch 7 oder 8, die mindestens eine Struktureinheit umfasst, die von einem aus BPEF, BNE, BNEF und DPBHBNA abgeleitet ist.

10. Optische Linse gemäß mindestens einem der Ansprüche 1 bis 9, die ferner eine Struktureinheit umfasst, abgeleitet von mindestens einem Monomer, ausgewählt aus der folgenden Gruppe von Monomeren: 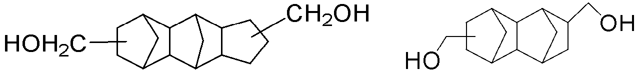 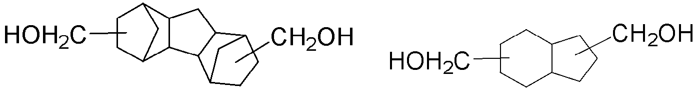 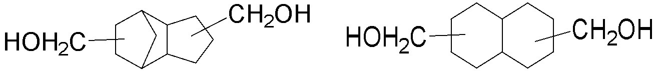 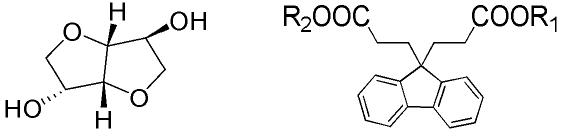 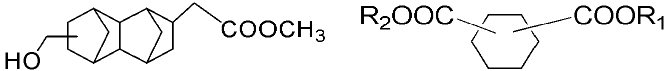 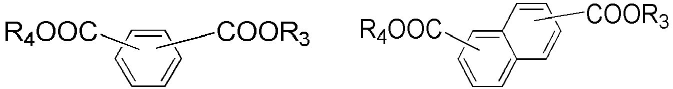 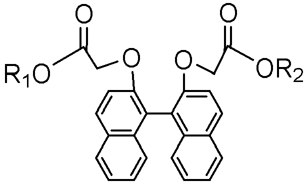 worin, in den Formeln: R₁ und R₂ jeweils unabhängig für ein Wasserstoffatom, eine Methylgruppe oder eine Ethylgruppe stehen; und R₃ und R₄ jeweils unabhängig für ein Wasserstoffatom, eine Methylgruppe, eine Ethylgruppe oder ein Alkylenglykol mit 2 bis 5 Kohlenstoffatomen stehen.

11. Optische Linse gemäß mindestens einem der Ansprüche 1 bis 10, wobei das Polystyrol-äquivalente gewichtsmittlere Molekulargewicht (Mw) des thermoplastischen Harzes 10.000 bis 100.000 beträgt und wobei das Polystyrol-äquivalente gewichtsmittlere Molekulargewicht (Mw) wie in der Beschreibung beschrieben gemessen wird.

12. Optische Linse gemäß mindestens einem der Ansprüche 1 bis 11, wobei der Brechungsindex (nD) des thermoplastischen Harzes 1,600 bis 1,700 beträgt und wobei der Brechungsindex (nD) wie in der Beschreibung beschrieben gemessen wird.

13. Optische Linse gemäß mindestens einem der Ansprüche 1 bis 12, wobei die Abbe-Zahl (v) des thermoplastischen Harzes 22,0 bis 26,0 beträgt und wobei die Abbe-Zahl (v) wie in der Beschreibung beschrieben gemessen wird.

14. Optische Linse gemäß mindestens einem der Ansprüche 1 bis 13, wobei die Glasübergangstemperatur des thermoplastischen Harzes 70 bis 200°C beträgt und wobei die Glasübergangstemperatur gemäß JIS K7121-1987 mit einem Temperaturanstiegsprogramm von 10°C/min unter Verwendung eines Differential-Scanning-Kalorimeters gemessen wird.

15. Optische Linse gemäß mindestens einem der Ansprüche 1 bis 14, wobei der photoelastische Koeffizient des thermoplastischen Harzes 25 bis 45 beträgt und wobei der photoelastische Koeffizient wie in der Beschreibung beschrieben gemessen wird.

## Revendications

1. Lentille optique comprenant une résine thermoplastique comprenant un motif de structure (A) dérivé d'un monomère représenté par la formule générale (1) : 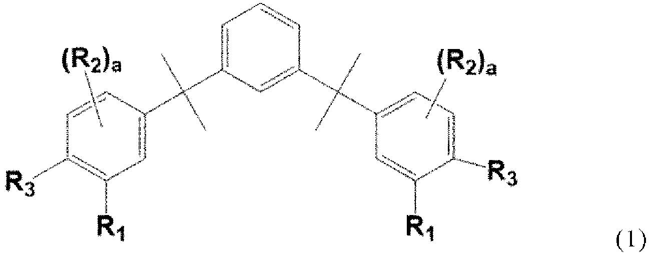 dans laquelle, dans la formule : chaque R₁ représente indépendamment un groupe aryle présentant 6 à 14 atomes de carbone ou un groupe aralkyle présentant 7 à 17 atomes de carbone ; chaque R₂ représente indépendamment un atome d'hydrogène, un groupe aryle présentant 6 à 14 atomes de carbone, ou un groupe aralkyle présentant 7 à 17 atomes de carbone ; chaque a représente indépendamment un nombre entier égal à 0 ou de 1 à 3 ; chaque R₃ représente indépendamment -OH ou -O-(CH₂)ₙ-OH ; et n représente un nombre entier de 1 à 4.

2. Lentille optique selon la revendication 1, dans laquelle le monomère représenté par la formule générale (1) est un monomère représenté par la formule (1A) : 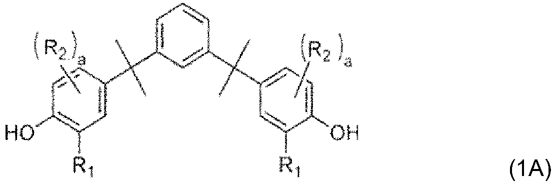 dans laquelle, dans la formule, R₁, R₂ et a sont les mêmes que ceux de la formule générale (1).

3. Lentille optique selon la revendication 1, dans laquelle le monomère représenté par la formule générale (1) est un monomère représenté par la formule (5) :

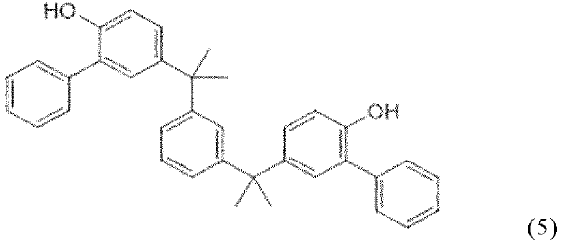

4. Lentille optique selon la revendication 1, dans laquelle le monomère représenté par la formule générale (1) est un monomère représenté par la formule (1B) : 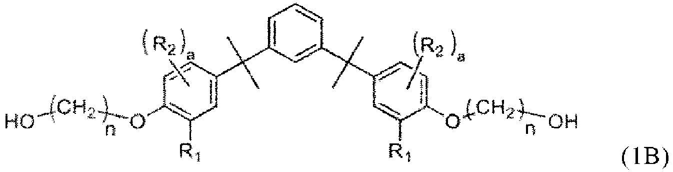 dans laquelle, dans la formule : R₁, R₂ et a sont les mêmes que ceux de la formule générale (1) ; et chaque n représente indépendamment un nombre entier de 1 à 4.

5. Lentille optique selon la revendication 1, dans laquelle le monomère représenté par la formule générale (1) est un monomère représenté par la formule (15) :

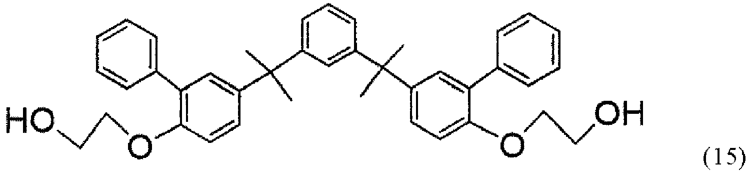

6. Lentille optique selon l'une quelconque des revendications 1 à 5, qui est une résine de polycarbonate, une résine de polyester-carbonate, ou une résine de polyester.

7. Lentille optique selon l'une quelconque des revendications 1 à 6, qui comprend un motif de structure (B) dérivé d'un monomère représenté par la formule générale (6) et/ou un motif de structure (C) dérivé d'un monomère représenté par la formule générale (7) : 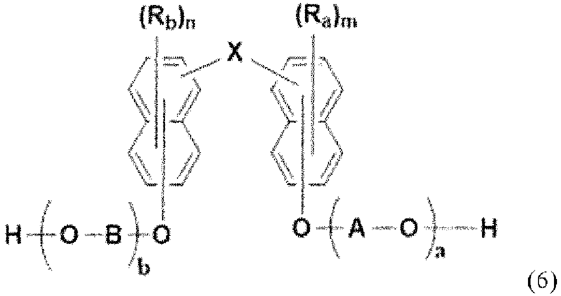 dans laquelle, dans la formule générale (6) :
Rₐ et R_{b} sont chacun indépendamment sélectionnés dans le groupe consistant en un atome d'hydrogène ; un atome d'halogène ; un groupe alkyle présentant 1 à 20 atomes de carbone et facultativement présentant un substituant ; un groupe alcoxy présentant 1 à 20 atomes de carbone et facultativement présentant un substituant ; un groupe cycloalkyle présentant 5 à 20 atomes de carbone et facultativement présentant un substituant ; un groupe cycloalcoxy présentant 5 à 20 atomes de carbone et facultativement présentant un substituant ; un groupe aryle présentant 6 à 20 atomes de carbone et facultativement présentant un substituant ; un groupe hétéroaryle présentant 6 à 20 atomes de carbone et facultativement présentant un substituant, qui contient au moins un hétéroatome de cycle sélectionné parmi O, N et S ; un groupe aryloxy présentant 6 à 20 atomes de carbone et facultativement présentant un substituant ; et -C≡C-Rₕ ;
Rₕ représente un groupe aryle présentant 6 à 20 atomes de carbone et facultativement présentant un substituant, ou un groupe hétéroaryle présentant 6 à 20 atomes de carbone et facultativement présentant un substituant, qui contient au moins un hétéroatome de cycle sélectionné parmi O, N et S ;
X représente une liaison simple ou un groupe fluorène facultativement présentant un substituant ;
A et B représentent chacun indépendamment un groupe alkylène présentant 1 à 5 atomes de carbone et facultativement présentant un substituant ;
m et n représentent chacun indépendamment un nombre entier de 0 à 6 ; et
a et b représentent chacun indépendamment un nombre entier de 0 à 10, 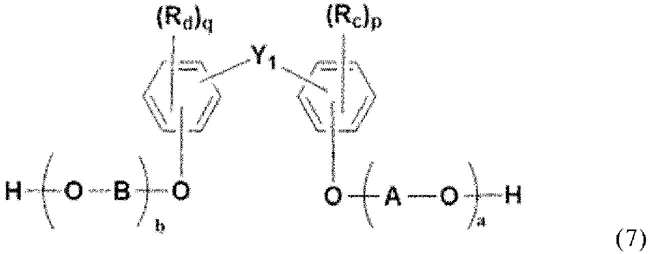
dans laquelle, dans la formule générale (7) :
R_{c} et R_{d} sont chacun indépendamment sélectionnés dans le groupe consistant en un atome d'hydrogène, un atome d'halogène, un groupe alkyle présentant 1 à 20 atomes de carbone et facultativement présentant un substituant, un groupe alcoxy présentant 1 à 20 atomes de carbone et facultativement présentant un substituant, un groupe cycloalkyle présentant 5 à 20 atomes de carbone et facultativement présentant un substituant, un groupe cycloalcoxy présentant 5 à 20 atomes de carbone et facultativement présentant un substituant, et un groupe aryle présentant 6 à 20 atomes de carbone et facultativement présentant un substituant ;
Y₁ représente une liaison simple, un groupe fluorène facultativement présentant un substituant, ou l'une quelconque des formules structurelles représentées par les formules (8) à (14) : 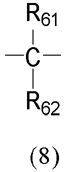
-S- (9) 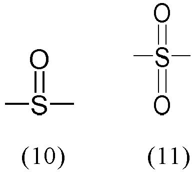
-(CH₂)ᵣ- (12)
-O- (13) 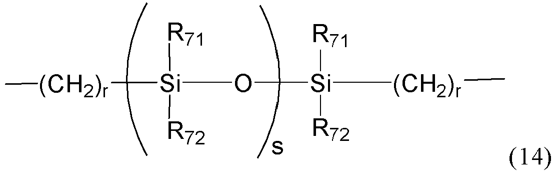
dans lesquelles, dans les formules (8) à (14) :
R₆₁, R₆₂, R₇₁ et R₇₂ représentent chacun indépendamment un atome d'hydrogène, un atome d'halogène, un groupe alkyle présentant 1 à 20 atomes de carbone et facultativement présentant un substituant, ou un groupe aryle présentant 6 à 30 atomes de carbone et facultativement présentant un substituant, ou représentent un cycle carbocyclique ou un cycle hétérocyclique présentant 1 à 20 atomes de carbone et facultativement présentant un substituant, dans lequel R₆₁ et R₆₂, ou R₇₁ et R₇₂, sont liés l'un à l'autre, et
r et s représentent chacun indépendamment un nombre entier de 0 à 5000 ; A et B représentent chacun indépendamment un groupe alkylène présentant 1 à 5 atomes de carbone et facultativement présentant un substituant ;
p et q représentent chacun indépendamment un nombre entier de 0 à 4 ; et
a et b représentent chacun indépendamment un nombre entier de 0 à 10.

8. Lentille optique selon la revendication 7, dans laquelle, dans la formule générale (6) et la formule générale (7), A et B représentent chacun indépendamment un groupe alkylène présentant 2 ou 3 atomes de carbone.

9. Lentille optique selon la revendication 7 ou la revendication 8, qui comprend au moins un motif de structure dérivé de l'un quelconque parmi BPEF, BNE, BNEF et DPBHBNA.

10. Lentille optique selon l'une quelconque des revendications 1 à 9, qui comprend en outre un motif de structure dérivé d'au moins un monomère sélectionné dans le groupe de monomères ci-dessous : 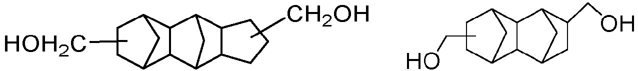 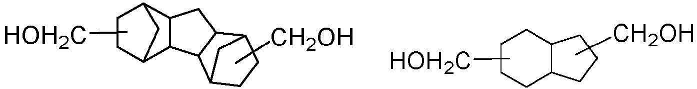 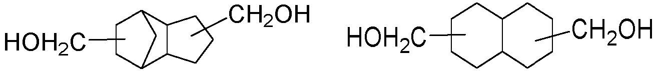 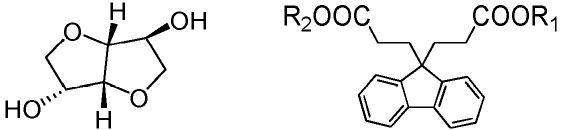 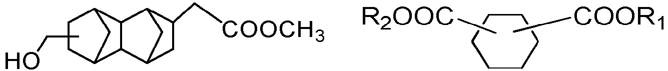 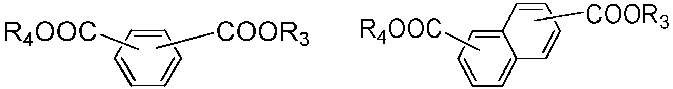 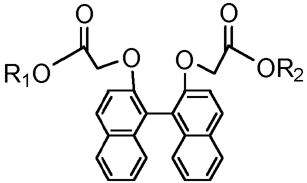 dans laquelle, dans les formules : R₁ et R₂ représentent chacun indépendamment un atome d'hydrogène, un groupe méthyle ou un groupe éthyle ; et R₃ et R₄ représentent chacun indépendamment un atome d'hydrogène, un groupe méthyle, un groupe éthyle ou un alkylèneglycol présentant 2 à 5 atomes de carbone.

11. Lentille optique selon l'une quelconque des revendications 1 à 10, dans laquelle une masse moléculaire moyenne en poids (Mw) en équivalent polystyrène de la résine thermoplastique est de 10 000 à 100 000 et dans laquelle la masse moléculaire moyenne en poids (Mw) en équivalent polystyrène est mesurée comme décrit dans la description.

12. Lentille optique selon l'une quelconque des revendications 1 à 11, dans laquelle un indice de réfraction (nD) de la résine thermoplastique est de 1,600 à 1,700 et dans laquelle l'indice de réfraction (nD) est mesuré comme décrit dans la description.

13. Lentille optique selon l'une quelconque des revendications 1 à 12, dans laquelle un nombre d'Abbe (v) de la résine thermoplastique est de 22,0 à 26,0 et dans laquelle le nombre d'Abbe (v) est mesuré comme décrit dans la description.

14. Lentille optique selon l'une quelconque des revendications 1 à 13, dans laquelle une température de transition vitreuse de la résine thermoplastique est de 70 à 200 °C et dans laquelle la température de transition vitreuse est mesurée sur la base de la norme JIS K7121-1987 avec un programme d'élévation de température de 10 °C/min en utilisant un calorimètre différentiel à balayage.

15. Lentille optique selon l'une quelconque des revendications 1 à 14, dans laquelle un coefficient photoélastique de la résine thermoplastique est de 25 à 45 et dans laquelle le coefficient photoélastique est mesuré comme décrit dans la description.
